# EUROPEAN PATENT SPECIFICATION

(11) **EP 1 600 000 B1**
(45) Date of publication and mention of the grant of the patent: **05.12.2018**
(21) Application number: 04718081.5
(22) Date of filing: 05.03.2004
(51) Int. Cl.: H04N 7/167, H04N 5/913

(54) **CONDITIONAL ACCESS PERSONAL VIDEO RECORDER**
PERSÖNLICHER VIDEOREKORDER MIT BEDINGTEM ZUGRIFF
ENREGISTREUR VIDEO PERSONNEL A ACCES CONDITIONNEL

(30) Priority: 06.03.2003 US 383130
(43) Date of publication of application: 30.11.2005
(73) Proprietor: Cisco Technology, Inc., San Jose, CA 95134 (US)
(72) Inventor: AKINS, III, Glendon L., Fort Collins, CO 80526 (US)
(74) Representative: Vidon Brevets & Stratégie
(86) International application number: PCT/US2004/006819
(87) International publication number: WO 2004/082258

(56) References cited:
- WO-A-98/43426
- WO-A-99/07150
- WO-A-02/104026
- US-A- 5 870 474
- US-A- 6 148 082
- US-A1- 2001 051 037
- US-B1- 6 697 489

## Description

### FIELD OF THE INVENTION

This invention relates generally to communications systems, such as subscriber television systems, among others, and more specifically to providing conditional access to recorded service instances.

### BACKGROUND OF THE INVENTION

In the past, subscriber television systems transmitted analog signals from a headend to the subscribers of the system. Today, however, modem subscriber television systems (STS) typically transmit both analog signals and digital signals to the subscribers, and due to technological advances, more and more of the services provided by the operator of a subscriber television system are being transmitted in digital format because, among other things, they require less bandwidth than analog signals and because digital services are of higher quality than analog services.

Modern subscriber television systems are conditional access systems, which provide services only to the subscribers of the systems. In a typical STS, a subscriber has a digital subscriber communication terminal (DSCT) for accessing the provided services. The DSCT is adapted to receive both analog and digital services and provide conditional access to the services.

Many of the digital services are premium services such as pay-per-view (PPV) movies or the like. Subscribers would like the opportunity to record digital services in a personal video recorder (PVR) or the like so that they can access the recorded services at their convenience. However, owners of the digital services do not want subscribers to have the unlimited ability to record the content of the digital services in PVRs because, among other reasons, they do not want the subscribers to have the ability to make illicit digital copies, which due to their high quality could then be sold as bootleg copies. Thus, there exists a need to provide limited recording capabilities to subscribers of a subscriber television system.

WO 02/104026 discloses an external storage device for a personal video recorder or television Set-Top Box. An MPEG transport stream is filtered to remove information not relevant to a selected program. This filtered transport stream is encrypted and then transmitted as isochronous data over an IEEE 1394 bus to an external storage device. The external storage device decrypts the filtered transport stream and returns the PAT and PMT tables to the personal video recorder.

### BRIEF DESCRIPTION OF THE DRAWINGS

FIG. 1 is a block diagram of a subscriber television system, such as a cable television system, in which the preferred embodiment of the present invention may be employed.
FIG. 2 is a block diagram of a headend in the subscriber television system broadcasting to a DSCT-PVR.
FIG. 3 is a block diagram of a headend in the subscriber television system.
FIG. 4 is a block diagram of a secure message.
FIGS. 5A and 5B are block diagrams of generating an authentication token and authenticating an authentication token, respectively.
FIG. 6 is a block diagram of a digital subscriber communication terminal-personal video recorder (DSCT-PVR).
FIGS. 7A and 7B are block diagrams of functional components of the DSCT-PVR recording a digital service and accessing a recorded service, respectively.
FIG. 8 is a block diagram of functional components of the DSCT-PVR accessing a recorded service.
FIG. 9 is a flow chart of steps taken in accessing a recorded service.
FIGS. 10A-10C are flow charts of steps taken to determine whether the DSCT-PVR should access a recorded service.

The invention is defined by the independent claims 1 and 34. Most of the following embodiments are merely examples.

### DETAILED DESCRIPTION OF PREFERRED EMBODIMENTS

Preferred embodiments of the present invention will be described more fully hereinafter with reference to the accompanying drawings in which like numerals represent like elements throughout the several figures, and in which several exemplary embodiments of the invention are shown. The present invention may, however, be embodied in many different forms and should not be construed as limited to the embodiments set forth herein. The examples set forth herein are non-limiting examples and are merely examples among other possible examples.

In one preferred embodiment, a digital subscriber communication terminal (DSCT) includes a personal video recorder (PVR) and the combination of the two is hereinafter referred to as a DSCT-PVR. Before a subscriber can record a digital service in the DSCT-PVR, the DSCT-PVR determines whether the DSCT-PVR is entitled to permit access to the service. If the DSCT-PVR is so entitled, it generates at least one decryptor for decrypting the service and stores the decryptor(s) with the service in a storage device. When a subscriber attempts to access the recorded service, the DSCT-PVR determines whether the DSCT-PVR is still entitled to permit access to the recorded service. If the DSCT-PVR is so entitled, the DSCT-PVR then uses the recorded decryptor(s) to decrypt the recorded service.

In another preferred embodiment of the invention, the DSCT-PVR receives decryption information from the headend along with the digital service and records the decryption information along with the digital service in the DSCT-PVR. When a subscriber attempts to access the recorded service, the DSCT-PVR then determines if the DSCT-PVR is entitled to permit access to the service, and if so, the DSCT-PVR uses the decryption information that was stored with the service to decrypt the recorded service.

In a third preferred embodiment, the DSCT-PVR records a service and decryption information. When a subscriber attempts to access the recorded service, the DSCT-PVR sends a message to the headend of the STS. The headend sends a reply message to the DSCT-PVR and the DSCT-PVR uses the reply message and other information to determine if the DSCT-PVR is entitled to permit access to the recorded service. If the DSCT-PVR is so entitled, the DSCT-PVR uses decryption information to access the recorded service.

It should be noted that digital services extend well beyond movies or television programming or other video/audio video services and that a PVR is adapted to record and play any digital service regardless of the content. For the purposes of this disclosure, a PVR is intended to include personal digital recorders and the like.

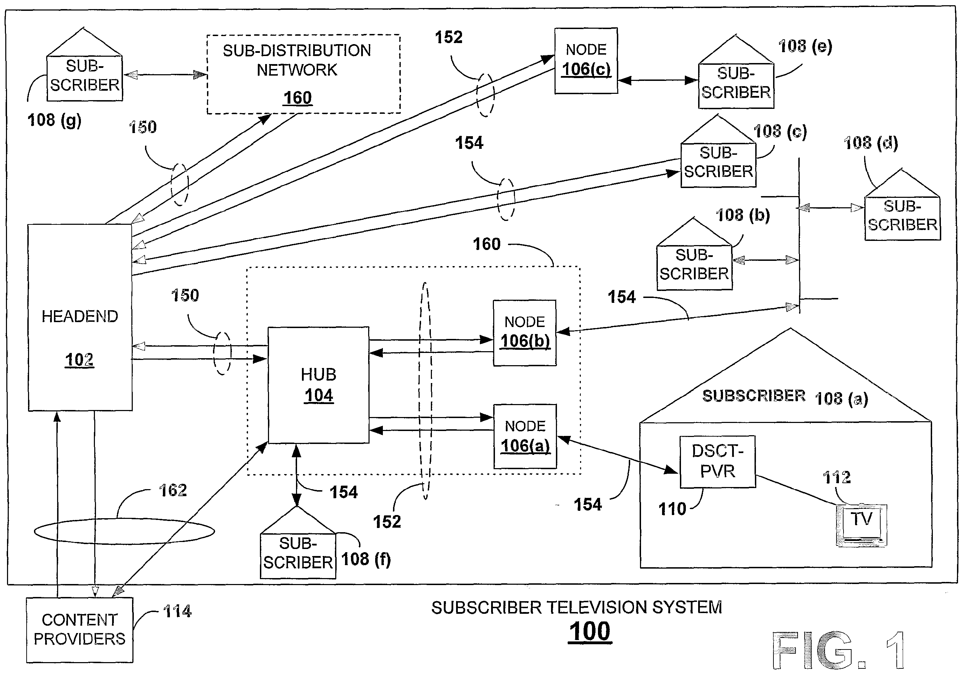

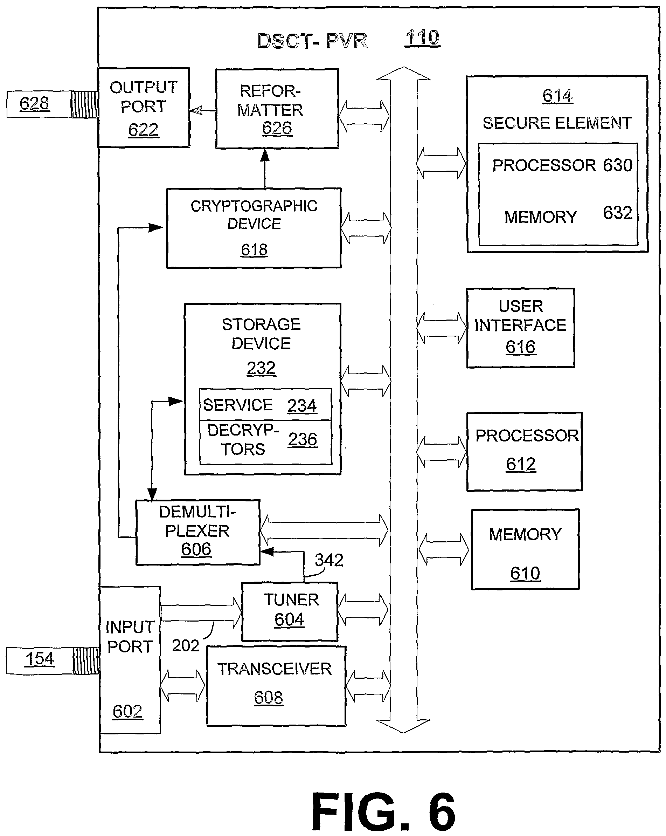

Before explaining a DSCT-PVR, an overview of a modern conditional access subscriber television system (STS), a headend of the STS, and secure authenticated communication between the headend and a DSCT-PVR is provided in Figures 1-5, respectively. In Figures 6-10 various embodiments of a DSCT-PVR are described.

The logic of the preferred embodiment(s) of the present invention can be implemented in hardware, software, firmware, or a combination thereof. In the preferred embodiment(s), the logic is implemented in software or firmware that is stored in a memory and that is executed by a suitable instruction execution system. If implemented in hardware, as in an alternative embodiment, the logic can be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array (s) (PGA), a field programmable gate array (FPGA), etc. In addition, the scope of the present invention includes embodying the functionality of the preferred embodiments of the present invention in logic embodied in hardware or software-configured mediums.

Any process descriptions or blocks in flow charts should be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention. In addition, the process descriptions or blocks in flow charts should be understood as representing decisions made by a hardware structure such as a state machine known to those skilled in the art.

### Subscriber Television System Overview

An overview of an exemplary STS, which is also sometimes referred to as a Digital Broadband Delivery System is provided in U. S. Patent No. 6,157, 719, entitled "Conditional Access System". A function of the STS is to: provide interfaces to content providers, service providers and entitlement agents; control access to and the use of the content and services; and to distribute the content and services to subscribers. The content and services are conditionally accessible to subscribers of the STS. In order to access a service, a subscriber must be "entitled," i.e., a subscriber needs to be authorized to access the service. The content providers and services providers may not want to be in the business of managing entitlements for the subscribers of the STS. In that case, the content and services from the content and service providers are associated with an entitlement agent, and the entitlement agent provides the subscribers with the entitlements for the associated content and services. In addition, the operator of the STS can act as an entitlement agent for service and content providers that don't want to be involved with providing entitlements for services to subscribers.

The subscriber television system offers subscribers of the system services such as, but not limited to, Internet service and telephone service and potentially hundreds of program selections or service instances. Service instances include, but are not limited to, an installment of an audio or visual or audio/visual program. A service instance can be broadcast to all of the subscribers of the subscriber television system, a portion of the subscribers, or an individual subscriber. Service instances include regular programming; special programming such as pay-per-view, and subscriber requested services such as personal television.

### Subscriber Television System

Referring to FIG. 1, a subscriber television system (STS) 100 includes, in one example among others, a headend 102, a plurality of hubs 104, multiple nodes 106, a plurality of subscriber locations 108, and a plurality of digital subscriber communication terminals/personal video recorders (DSCT-PVRs) 110. The headend 102 provides the interface between the STS 100 and content and service providers 114, or entitlement agents, such as broadcasters, internet service providers, entitlement agents, and the like via communication link 162. The transmission medium 162 between the headend 102 and the content and service providers 114 is typically two-way, thereby allowing for two-way interactive services such as Internet access via STS 100, video-on-demand, interactive program guides, etc. In the preferred embodiment, the hubs 104 are also in direct two-way communication with the content and service providers 114 via communication link 162 for providing two-way interactive services.

In the preferred embodiment, the headend 102 is in direct communication with the hubs 104 via communication link 150. In addition, the headend 102 is in direct communication with the nodes 106 via communication link 152 and in direct communication with the subscriber locations 108 via communication link 154. Whether or not the headend 102 is in direct communication with subscriber locations 108 is a matter of implementation.

The hub 104 receives programming and other information, which is typically in a protocol such as ATM or Ethernet, from headend 102 via transmission medium 150. The hub 104 transmits information and programming via transmission medium 152 to nodes 106, which then transmit the information to subscriber locations 108 through transmission medium 154. Whether the hub 104 communicates directly to subscriber locations 108 or to nodes 106 is matter of implementation, and in the preferred embodiment, the hub 104 is also adapted to transmit information and programming directly to subscriber locations 108 via transmission medium 154.

In the preferred embodiment, the transmission medium 150 and 152 are optical fibers that allow the distribution of high quality and high-speed signals, and the transmission medium 154 is either broadband coaxial cable or optical fiber. When the communication path from the headend 102 to the DSCT-PVR 110 includes a combination of coaxial cable and optical cable, the communication path is frequently referred to as a hybrid-fiber-coax (HFC) communication path. In alternative embodiments, the transmission media 150, 152 and 154 can include one or more of a variety of media, such as optical fiber, coaxial cable, satellite, direct broadcast, terrestrial digital, Multichannel Multipoint Distribution System (MMDS) or other transmission media known to those skilled in the art. Typically, the transmission media 150, 152 and 154 are two-way communication media through which both in-band and out-of-band information are transmitted. Through the transmission media 150, 152, and 154 subscriber locations 108 are in direct or indirect two-way communication with the headend 102 and/or the hub 104. Typically, when the DSCT-PVR 110 is in satellite, MMDS, or terrestrial-digital broadcast communication with the headend 102, the communication path is one-way from the headend 102 to the DSCT-PVR 110, but in that case, the DSCT-PVR 110 and the headend 102 are typically in two-way communication via a telephone network (not shown).

The hub 104 functions as a mini-headend for the introduction of programming and services to sub-distribution network 160. The sub-distribution network 160 includes hub 104 and the plurality of nodes 106 connected to hub 104. Having a plurality of hubs 104 that function as mini-headends facilitates the introduction of different programming, data and services to different sub-distribution networks of STS 100. For example, the subscriber location 108(b), which is connected to node 106(b), can have different services, data and programming available than the services, data and programming available to subscriber location 108(c), which is connected directly to headend 102, even though the subscriber locations 108(b) and 108(c) may be in close physical proximity to each other. Services, data and programming for subscriber location 108(b) are routed through hub 104 and node 106(b); and hub 104 can introduce services, data and programming into the STS 100 that are not available through the headend 102. In addition, in one preferred embodiment, the hub 104 and the DSCT-PVRs 110 of the hub's sub-distribution network 160 are in two-way communication, which enables the hub 104 to provide real-time conditional access to its DSCT-PVRs 110. Details by which the headend 102 provides conditional access to the DSCT-PVRs 110 of the STS 100 are provided hereinbelow. Because the hub 104 functions as a mini-headend, it can implement the same or similar procedures to provide conditional access.

A DSCT-PVR 110, which is located at a subscriber's premises 108, provides among other things, a two-way interface between the STS 100 and the subscriber. The DSCT-PVR 110 decodes and further process the signals for display on a display device, such as a television set (TV) 112 or a computer monitor, among other examples. Those skilled in the art will appreciate that in alternative embodiments the equipment for first decoding and further processing the signal can be located in a variety of equipment, including, but not limited to, a computer, a TV, a monitor, or an MPEG decoder, among others.

In addition, the DSCT-PVR 110 is adapted to record digital services in a secure fashion so as to prevent illicit/bootleg copying and/or adapted to deny access to a recorded digital service when the DSCT-PVR 110 is not entitled to permit access. If the DSCT-PVR is entitled to permit access to a recorded service, the DSCT-PVR 110 provides the service, responsive to a subscriber request, to a subscriber device such as a television, computer monitor, audio system, MPEG decoder, among others.

Secure communication between the headend 102 and the DSCT-PVRs 110 is preferably accomplished using pairs of asymmetrical keys known to those skilled in the art, such as Rivest, Shamir, & Adleman (RSA) public key encryption technology. Briefly described, an asymmetrical key pair includes a public key, which is distributed to the public, and a private key, which is not distributed. Content that is encrypted with a public key can only be decrypted using the corresponding private key. A message that is signed with a private key is authenticated with the corresponding public key. The headend 102 and the DSCT-PVR 110 can securely communicate after they have exchanged public keys.

The headend 102 includes a database (not shown) that has the public key of each DSCT-PVR 110 in the STS 100. The headend 102 can securely communicate with a particular DSCT-PVR 110 by encrypting the content of a message using the public key of the particular DSCT-PVR 110. Only the particular DSCT-PVR 110 that has the corresponding private key can decrypt the content of the message. The private key of the headend 102 can also sign the message, and in that case the DSCT-PVR 110 uses the public key of the headend 102 to authenticate the message. For details regarding cryptography that a reasonably skilled person would understand see, Bruce Schneier, "Applied Cryptography", John Wiley & Sons, 1994. The DSCT-PVR 110 can also communicate with the headend 102 using public key-private key cryptography.

In the preferred embodiment, when the DSCT-PVR 110 is manufactured it is assigned a serial number, and it is provided with its own private key-public key pair and with a public key of an access controlling authority. The keys are provided to the DSCT-PVR 110 in a secure manner and stored in a protected memory in the DSCT-PVR 110. The manufacturer of the DSCT-PVR maintains a database that includes the public keys and the serial numbers of each of the DSCT-PVRs 110 that the manufacturer produces. Each DSCT-PVR 110 in the STS 100 has a unique serial number, and the serial number, which can be the MAC address of the DSCT-PVR 110, is used for addressing messages to the DSCT-PVR 110. The manufacturer provides a copy of the public key and the serial number of each DSCT-PVR 110 in the STS 100 to the operator of the STS 100. In that case, the manufacturer is a key certification authority that certifies to the operator of the STS 100 that a given public key belongs to a specific DSCT-PVR 110. The operator of the STS 100 maintains its database of public keys and serial numbers of each DSCT-PVR 110 in the STS 100.

In the preferred embodiment, the DSCT-PVR 110 is provided with multiple public keys during its manufacture. The DSCT-PVR 110 implicitly trusts these public keys because they were given to the DSCT-PVR 110 during its manufacture in a secure fashion. Consequently, the DSCT-PVR 110 trusts any message that is signed by a private key corresponding to one of these trusted public keys. At least one of the trusted public keys can be replaced by a different public key, which then becomes a trusted public key. To replace a particular trusted public key, the DSCT-PVR 110 receives two messages with a new public key included therein. A different private key signs each one of the two messages, and each private key corresponds to one of the trusted public keys stored in the DSCT-PVR 110. However, the signing private keys do not correspond to the particular trusted public key that is being replaced. The DSCT-PVR 110 uses its trusted public keys to verify that the messages were signed by one of the corresponding private keys, and the DSCT-PVR 110 only replaces one of its trusted public keys when the message is verified.

Before the DSCT-PVR 110 receives and accesses service instances from the headend 102, the DSCT-PVR 110 is registered with the headend 102 and entitled to the service instances. When the DSCT-PVR 110 is connected to the STS 100, it sends a message, which includes the serial number of the DSCT-PVR 110, to the headend 102. The operator of the STS 100 compares the serial number of the DSCT-PVR 110 against its database and registers the DSCT-PVR 110 if the database includes the serial number of the DSCT-PVR 110. Generally, the operator of the STS 100 replaces one of the trusted public keys of the DSCT-PVR 110 with its own trusted public key. This is accomplished by having the manufacturer of the DSCT-PVR 110 digitally sign two messages, each of which include the new trusted public key, for the DSCT-PVR 110 and then sending the two messages to the DSCT-PVR 110.

In one preferred embodiment, the operator of the STS 100 acts as the access controlling authority that controls access to the subscriber network. In another embodiment, among others, the manufacturer of the DSCT-PVR 110 acts as the access controlling authority. There is conditional access authority (CAA) logic implemented in the headend 102 that the access controlling authority uses for controlling access to the STS 100. The conditional access authority sends the DSCT-PVR 110 a secure message such as an entitlement management message (EMM), which is digitally signed by a private key of the conditional access authority. For the purposes of this disclosure, a secure message includes, as a non-limiting example, a message that has been digitally signed by the sender so that the recipient can verify the source of the message and verify that the content of the received message was not tampered with nor corrupted in transmission. The content of a secure message may be encrypted when the sender wants to make the content private or the content can be transmitted without encryption.

In the preferred embodiment, the private key of the conditional access authority corresponds to one of the trusted public keys of the DSCT-PVR 110. The DSCT-PVR 110 authenticates the EMM using the trusted public key of the conditional access authority and acts upon the EMM only if the EMM is authenticated as having come from the conditional access authority. Among other things, the conditional access authority uses EMMs to instruct the DSCT-PVR 110 to allocate a portion of its memory for entitlement information related to a service instance provided by an entitlement agent and to provide the DSCT-PVR 110 with the public key for an entitlement agent.

The CAA establishes an entitlement agent in the DSCT-PVR by having the DSCT-PVR 110 partition its memory such that a portion of the memory is allocated to the entitlement agent, and then providing the DSCT-PVR with the public key of the entitlement agent. Once the entitlement agent is established with the DSCT-PVR, the DSCT-PVR 110 sends its public key to the entitlement agent, after which they can securely communicate using signed and encrypted messages. The entitlement agent is authorized by the CAA to manage the portion of the memory allocated to it and to provide entitlements for services associated with the entitlement agent.

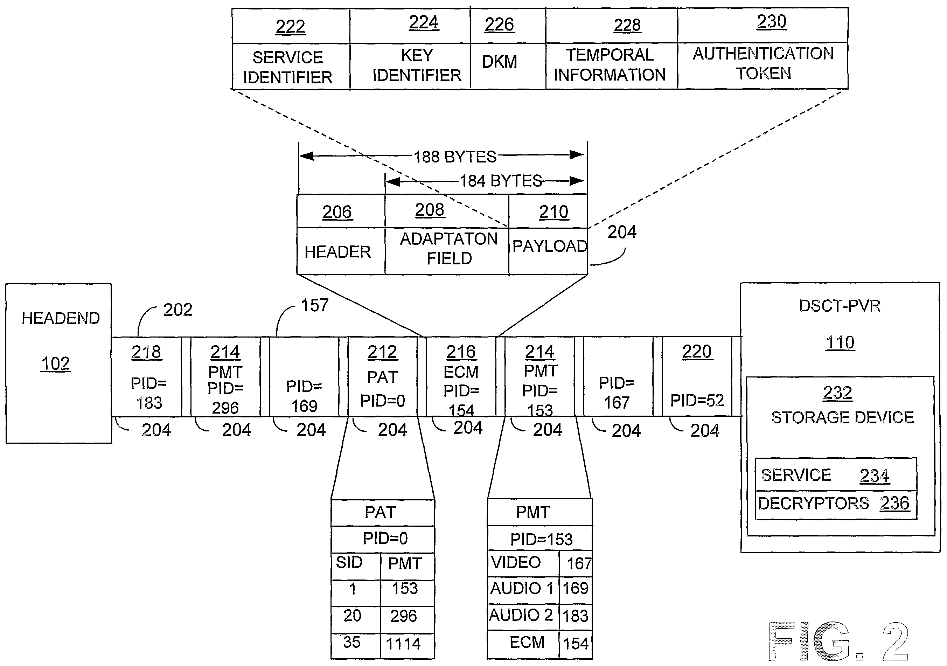

Referring to FIG. 2, the headend 102 transmits a plurality of transport streams 202 to the DSCT-PVR 110 via the communication link 154. Each transport stream is made up of a stream of packets 204. The packets 204 carry information such as system information and digital services.

For exemplary purposes the packets 204 are described in terms of MPEG packets. However, it is to be understood that this is for exemplary purposes only and is a non-limiting example. A brief description of MPEG packets are provided hereinbelow, but further details are provided in the MPEG-1 standards (ISO/IEC 11172), the MPEG-2 standards (ISO/IEC 13818) and the MPEG-4 standards (ISO/IEC 14496) are described in detail in the International Organization for Standardization document ISO/IEC JTC1/SC29/WG11 N (June 1996 for MPEG-1, July 1996 for MPEG-2, and October 1998 for MPEG-4).

Briefly described, an MPEG packet 204 is of fixed size, 188 bytes, and it includes a header 206, which is 4 bytes in size and which includes, among other things, a packet identifier (PID) field. The PID field is a 13-bit field that is used to identify packets, and streams of packets. PID values range from 0 to 8,191, inclusive. The PID"0"is reserved for program association tables (PATs). In the STS 100, other PID values are reserved for, among other things, system specific information tables. For example, a "time-message"220, which carries a time indicator for the current system time has the PID value 52, which in STS 100 could be a reserved PID. Whenever the DSCT-PVR 110 needs to determine the current time of the STS 100, the DSCT-PVR 110 can extract time- messages 220, from the transport stream 202 to determine the current time.

MPEG packets 204 also include an adaptation field 208 and a payload 210. The adaptation field 208 and payload 210 are separately variable in length, but the aggregate length is 184 bytes. In many MPEG packets 204, the adaptation field 208 is set to zero bytes by a field in the header 206 (not shown). The adaptation field 208 is used for, among other things, stuffing the MPEG packet 204 when the size of the payload 210 is less than 184 bytes.

Typically the payload 210 is a portion of a digital service, or a table, or a portion of a table, or other system information, and when the payload 210 carries a portion of a digital service, the portion of the digital service is encrypted. Only legitimate subscribers of the STS 100 have the necessary entitlements and keys for decrypting the payload 210.
Selected services such as non-premium television programming or other programming can be carried without being encrypted.

System information such as, but not limited to, tables and messages are also carried in the payload 210 of the MPEG packet 204 and are typically carried without encryption. Among other things, system information includes PATs 212, Program Map Tables (PMTs) 214, Entitlement Control Messages (ECMs) 216, and time-messages 220.

The PAT 212 associates digital services carried by the transport stream 202 with PMTs 214. For example, a given digital service has a service identifier (SID) of 1 and is associated with the PMT 214 having PID 153 and another service having a service identifier (SID) of 20 is associated with the PMT 214 having the PID 296.

The PMT 214 associates elementary streams of a given service to their respective PID values. For example, a given service is identified in the PAT 212 as having the SID 1, and the PMT 214 for that given service has the PID 153. In this example, the given service is a movie or a television program or a video service that is made up of various elementary streams of content such as video, audio 1, audio 2, etc., where the different audio streams carry audio tracts of the service in different languages. Thus, MPEG packets 204 having the PID 167 carry the video stream for the given service, and audio tract 1 for the given service is carried by the MPEG packets 204 having the PID 169. It should be noted that the PID values are uniquely assigned such that no two elementary streams of different services, or the same service, would have the same PID value. The PMT 214 denoted by PID 153 also associates entitlement control messages (ECM) 216 to a packet having the PID 154. An ECM is a system specific packet that includes, among other things, a service identifier (SID) 222, a key identifier 224, decryption-key-material (DKM) 226, temporal information 228, and an authentication token 230.

The authentication token 230 is a token that the recipient of the ECM uses for, among other things, authenticating the validity of the ECM 216. In the STS 100, messages and other information frequently include authentication tokens so that the messages or other information can be authenticated. Typically, an authentication token for an ECM is a hash digest of at least a portion of the payload 210 of the ECM 216. Whereas, for other messages, an authentication token might be a hash digest that is digitally signed. Digitally signed hash digest and hash digest in general are exemplary authentication tokens and should be considered as non-limiting examples of authentication tokens known to those skilled in the art.

The ECM 216 and the cryptographic system of the STS 100 will be described in detail hereinbelow. However, first a brief description of how in one embodiment, the DSCT-PVR 110 accesses a digital service is given. When a subscriber requests a digital service using a user input device such as a remote control (not shown), the DSCT-PVR 110 extracts the PAT 212 from the transport stream 202 by finding an MPEG packet 204 having PID 0. Next, the DSCT-PVR 110 uses the PAT 212 to determines the PID value of the PMT 214 for the requested service and extracts the correct PMT 214 from the transport stream 202 using that PID value. For example, if the subscriber had requested the given service having SID 1, which for exemplary services is a movie, then from the PAT 212 the DSCT-PVR determines that the correct PMT is carried in packets 204 having the PID 153, which are then extracted from transport stream 202. The DSCT-PVR 110 uses the PMT 214 to determine the PID values of the elementary streams that make up the requested digital service and the PID value of the ECMs for the requested digital service.

Typically, instead of using a single encryption key for an entire service, a digital service is encrypted using encryption keys that are changed multiple times per minute. Thus, if an unauthorized person (pirate) obtains a single decryption key the pirate can only access a fraction of a minute of the service, instead of the entire service. Decryption information is transmitted from the headend 102 to the DSCT-PVR 110 using Key Identifier 224 and DKM 226. If the DSCT-PVR 110 is entitled to permit access to the service, the DSCT-PVR 110 processes the DKM 226 of the ECM 214 is using a key identified by the Key Identifier 224 to generate a single decryption key, control word. Thus, a series of different ECMs 216, each one having a different DKM 226, are multiplexed into the transport stream 202 so as to provide the DSCT-PVR 110 with the necessary information for generating the control words for decrypting the digital service. However, before the DSCT-PVR 110 decrypts the service, the DSCT-PVR 110 uses, among other things, the SID 222 in determining whether the DSCT-PVR 110 is entitled to permit access to the given service.

The DSCT-PVR 110 preferably includes a storage device 232 in which recorded services 234 and decryptors 236 are stored. The decryptors 236 are used for, among other things, determining whether the DSCT-PVR 110 is entitled to permit subscriber access to the stored service 234, and if so, for generating control words for decrypting the recorded service 234.

In a first preferred embodiment of the invention, before a requested service is stored in the storage device 232, the DSCT-PVR 110 determines whether the DSCT-PVR 110 is entitled to access the requested service, and if so, packets of the requested service are stored in the storage device 232 as they are received, and decryptors 234 are generated at the DSCT-PVR 110 and stored in the storage device 232. As will be explained in detail hereinbelow, the decryptors 236 are generated using information included in the ECMs received at the DSCT-PVR 110. When the subscriber wants to access the recorded service 234, the DSCT-PVR 110 determines the current time using the "time-message" 220 and determines whether the DSCT-PVR 110 is entitled to access the recorded service 234. If it is entitled, then the DSCT-PVR 110 uses the decryptors 236 to access the stored service 234.

In another embodiment, when the DSCT-PVR 110 records a service, it does not determine whether it is entitled to record or access the service. The service is simply stored in storage device 232. However, when the subscriber attempts to access the recorded service 234, the DSCT-PVR 110 determines the current time using the "time-message" 220 and determines whether the DSCT-PVR 110 is entitled to access the recorded service 234.

In another embodiment, when a subscriber attempts to access a recorded service 234 the DSCT-PVR 110 sends a secure message to the headend 102. The message includes a random number or other information that is used as a challenge. The headend processes the message and transmits an authenticatable reply message having the current time and the challenge included therein. The DSCT-PVR 110 authenticates the reply message, and if the reply message is determined to be authentic, i.e., it came from the headend 102 and has not been tampered with, then it determines if the DSCT-PVR 110 is entitled to access the recorded service 234. The DSCT-PVR 110 uses the current time included in the reply message as a reference time and does not accept any time-message 220 as being authentic if the time-message has a time that is earlier than the reference time. In this embodiment, the reference time prevents spoofing the DSCT-PVR 110 by using earlier transmitted time-messages 220.

In another embodiment, the DSCT-PVR 110 has both entitlements and rights for recorded services 234. When the subscriber attempts to record a received service, the DSCT-PVR 110 determines whether the DSCT-PVR 110 has the right to record it. In addition to the right to record, other rights include the right to record to an external storage device (not shown) or the right to detached access, i.e., accessing the recorded service 234 when the DSCT-PVR 110 is not in communication with the headend 102 of the STS 100. Another right includes the right to copy the recorded service 234.

In yet another embodiment, the DSCT-PVR 110 has both entitlements and rights, and in this embodiment, the rights of the DSCT-PVR 110 are verified by the headend 102. When a subscriber attempts to record or play a recorded service 234, the DSCT-PVR 110 transmits a message that includes DSCT-PVR rights and a challenge, such as a random number, to the headend 102. The headend 102 determines whether the DSCT-PVR is authorized, i.e., whether it currently has the selected rights, or is authorizable, i.e., the selected rights can be provided to the DSCT-PVR 110, and if so, the headend 102 sends a reply message. The reply message includes the challenge and selected rights for the DSCT-PVR 110. The DSCT-PVR 110 authenticates the reply message, and if the message is authentic, i.e., the message came from the headend 102 and was not tampered with, the DSCT-PVR 110 uses the selected rights included in the reply message. In this embodiment, the challenge and the selected rights are included in the reply message as encrypted content. A subscriber cannot spoof the DSCT-PVR 110 by providing the DSCT-PVR 110 with an expired reply message, because when the DSCT-PVR 110 processes the reply message to authenticate the reply message, the DSCT-PVR 110 would determine the expired reply message is not authentic. Nor can the subscriber edit the content of the reply message to spoof the DSCT-PVR 110, because the content of the reply message was encrypted at the headend 102.

### Headend

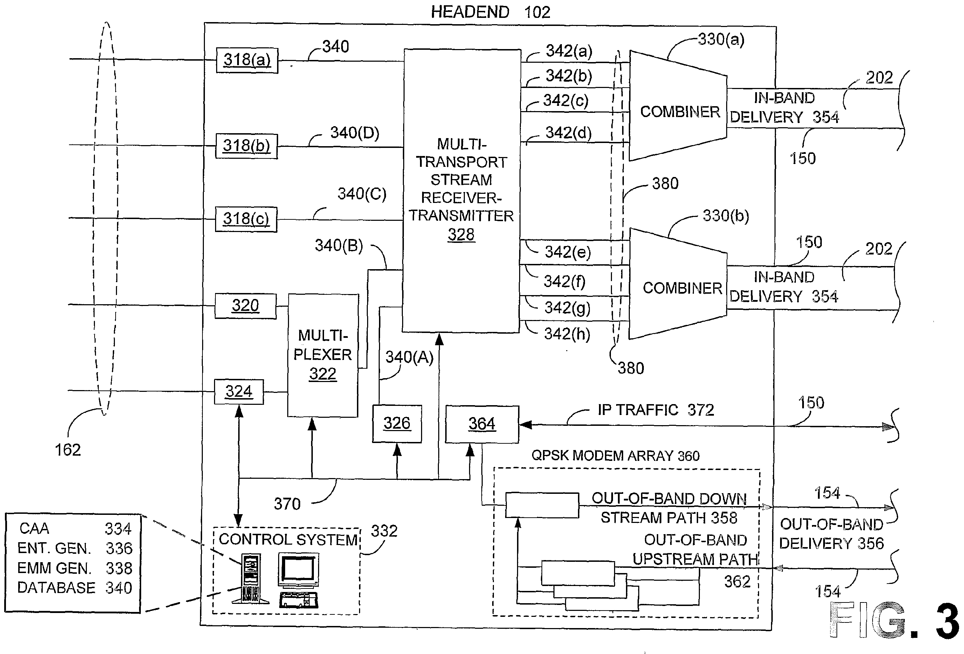

Referring to FIG. 3, in a typical system of the preferred embodiment of the invention, the headend 102 receives content from a variety of input sources, which can include, but are not limited to, a direct feed source (not shown), a video camera (not shown), an application server (not shown), and other input sources (not shown). The input signals are transmitted from the content providers 114 to the headend 102 via a variety of communication links 162, which include, but are not limited to, satellites (not shown), terrestrial broadcast transmitters (not shown) and antennas (not shown), and direct lines (not shown). The signals provided by the content providers, or entitlement agents, can include a single program or a multiplex of programs.

The headend 102 generally includes a plurality of receivers 318 that are each associated with a content source. Generally, content is transmitted from the receivers 318 as a transport stream 340. MPEG encoders, such as encoder 320, are included for digitally encoding content such as local programming or a feed from a video camera. Typically, the encoder 320 produces a variable bit rate transport stream. Prior to being modulated, some of the signals may require additional processing, such as signal multiplexing, which is preformed by multiplexer 322.

A switch, such as asynchronous transfer mode (ATM) switch 324, provides an interface to an application server (not shown). There can be multiple application servers providing a variety of services such as, among others, a data service, an Internet service, a network system, or a telephone system. Service and content providers 114 (shown in FIG. 1) may download content to an application server located within the STS 100 or in communication with STS 100. The application server may be located within headend 102 or elsewhere within STS 100, such as in a hub 104.

Typically, the headend 102 includes a server such as a video-on-demand (VOD) pump 326. VOD pump 326 provides video and audio programming such as VOD pay-per-view programming to subscribers of the STS 100. Usually, the content from VOD pump 326 is provided in the form of the transport stream 340.

It should be noted that the VOD pump 326 is adapted to provide multiple concurrent services to a subscriber location 108, thereby enabling a user of the DSCT-PVR 110 to access one of the services and a user of the client-receiver 122 to access another service. The number of services provided from the headend 102 to a single subscriber location 108 is limited by the bandwidth of the STS 100 and the number or client-receivers 122 at the subscriber location.

The various inputs into the headend 102 are then combined with the other information, which is specific to the STS 100, such as local programming and control information. The headend 102 includes a multi-transport stream receiver-transmitter 328, which receives the plurality of transport streams 340 and transmits a plurality of transport streams 342. In the preferred embodiment, the multi-transport stream receiver-transmitter 328 includes a plurality of modulators, such as, but not limited to, Quadrature Amplitude Modulation (QAM) modulators, that convert the received transport streams 340 into modulated output signals suitable for transmission over transmission medium 380.

In the preferred embodiment, the output transport streams 342 have a bandwidth of 6 MHz centered upon a frequency that is predetermined for each transport stream 342. The frequency for a given transport stream 342 is chosen such that the given transport stream will not be combined with another transport stream at the same frequency. In other words, only transport streams that are modulated at different frequencies can be combined, and therefore, the frequencies of transport streams 342A-D are different from each other, as are the frequencies of transport streams 342E-H. The transport streams 342 from the multi-transport stream receiver-transmitter 328 are combined, using equipment such as combiners 330, for input into the transmission medium 150, and the combined transport streams 202 are sent via the in-band delivery path 354 to subscriber locations 108.

A control system, such as system controller 332, which preferably includes computer hardware and software providing the functions discussed herein, allows the STS system operator to control and monitor the functions and performance of the STS 100. The system controller 332 interfaces with various components, via communication link 370, in order to monitor and/or control a variety of functions, including the channel lineup of the programming for the STS 100, billing for each subscriber, and conditional access for the content distributed to subscribers. The system controller 332 provides input to the multi-transport stream receiver-transmitter 328 for setting its operating parameters, such as system specific MPEG table packet organization or conditional access information among other things.

The system controller 332 includes database 340 and logic for a conditional access authority (CAA) 334, an entitlement generator 336 and an EMM generator 338. The database 340 includes, among other things, the serial numbers and public keys of the DSCT-PVRs 110 of the STS 100. The EMM generator 338 uses database 340 to generate individually addressable EMM templates; to generate EMM templates for multiple DSCT-PVRs 110 and client-receivers 122; and to generate global EMM templates.

Among other things, the CAA 334 is used by the access controlling authority to enable DSCT-PVRs 110 to receive entitlements for service instances. The CAA 334 receives EMM templates from the EMM generator 338 and uses the EMM template to create an EMM. To create an EMM, the CAA 334 includes a message content and an authentication token in the EMM template. The CAA 334 determines whether the message content should be encrypted, and if so, the CAA 334 encrypts the message content using the public key of the recipient of the EMM, which is retrieved from the database 340. The authentication token of an EMM is generally a one-way hash digest of the message content that has been digitally signed by the private key of the CAA 334. In the preferred embodiment, the recipient, i.e., the DSCT-PVR 110, implicitly trusts any EMM that has an authentication token from the CAA 334 because the CAA 334 signs the hash digest with the private key that corresponds to one of the trusted public keys stored in the DSCT-PVR 110.

The DSCT-PVR 110 includes a partitionable memory and the CAA 334 partitions the memory of the DSCT-PVR 110 using EMMs. The DSCT-PVR 110 only partitions its memory in response to EMMs from the CAA 334. The CAA 334 instructs the DSCT- PVR 110 to allocate a portion of its memory to the entitlement generator 336 and provides the DSCT-PVR 110 with the public key of the entitlement generator 336. Once the DSCT-PVR 110 has the public key of the entitlement generator 3369 the entitlement generator 336 can securely communicate with the DSCT-PVR 110, and thereby provide entitlements for service instances to the DSCT-PVR 110. The CAA 334 can also disable the entitlement generator 336 by having the DSCT-PYR110 unallocate the allocated memory. For details regarding allocating and configuring memory in the DSCT-PVRs, see U. S. Patent No. 5,742, 677, Pinder et al., Information Terminal Having Reconfigurable Memory, filed April 3,1995.

The entitlement generator 336 generates encryption information and the entitlements of the DSCT-PVRs for the service instances. The entitlement generator 336 provides the encryption information to the multi-transport stream transceiver 328, which generates control words therefrom for encrypting the service instances. In the preferred embodiment, the encryption information is a multi-session key (MSK), which has a relatively long life, such as days, weeks, or months. The MSK is transmitted to the DSCT-PVRs 110 in EMMs created by the entitlement generator 336.

The entitlement generator 336 receives EMM templates from the EMM generator 338 for creating EMMs. The EMMs from the entitlement generator 336 also include an authentication token, which is a hash digest digitally signed by the private key of the entitlement generator 336. The hash digest is a digest of the message content. In some situations, the entitlement generator 336 produces a hash digest of at least a portion of the message content and a secret that is known to the recipient. The entitlement generator 336 determines whether to encrypt the message content and when it is determined to do so, it uses the recipient's public key to encrypt the message content. Typical message content in an EMM from the entitlement generator 336 includes MSK, secrets, and entitlements to services.

In an alternative embodiment, the system controller 332 includes a main computer and a plurality of transaction encryption devices, which are coupled to the main computer via a secure link, such as a secure dedicated Ethernet connection. Each transaction encryption device includes a processor and a memory for implementing cryptographic algorithms. In this embodiment, the CAA 334 resides in a first transaction encryption device and an entitlement generator 336 resides in each of the remaining transaction encryption devices. Each one of the transaction encryption devices, which have an entitlement generator, is associated with either an entitlement agent or a content provider. An entitlement agent or content provider can use his or her associated transaction encryption device to provide entitlements to the DSCT-PVRs 110. In this manner, multiple entitlement agents or content providers can provide content to the STS 100, and the operator of the STS 100 can delegate the responsibility of providing entitlements to the entitlement agents or content providers.

Control information such as EMMs and other data can be communicated to DSCT-PVRs 110 via the in-band delivery path 354 or to DSCT-PVRs 110 connected to the headend 102 via an out-of-band delivery path 356. The out-of-band data is transmitted via the out-of-band downstream path 358 of transmission medium 154 by means such as, but not limited to, a Quadrature Phase-Shift Keying (QPSK) modem array 360, or an array of data-over-cable service interface specification (DOCSIS) modems, or other means known to those skilled in the art. Two-way communication utilizes the upstream portion 362 of the out-of-band delivery system. DSCT-PVRs 110 transmit out-of-band data through the transmission medium 154, and the out-of-band data is received in headend 102 via out-of-band upstream paths 362. The out-of-band data is routed through router 364 to an application server or to the VOD pump 326 or to system controller 332. Out-of-band control information includes such information as a pay-per-view purchase instruction and a pause viewing command from the subscriber location 108 (shown in FIG. 1) to a video-on-demand type application server, and other commands for establishing and controlling sessions, such as a Personal Television session, etc. The QPSK modem array 360 is also coupled to communication link 152 (FIG. 1) for two-way communication with the DSCT-PVRs 110 coupled to nodes 106.

The router 364 is used for communicating with the hub 104 through transmission medium 150. Typically, command and control information among other information between the headend 102 and the hub 104 are communicated through transmission medium 150 using a protocol such as but not limited to Internet Protocol. The IP traffic 372 between the headend 102 and hub 104 can include information to and from DSCT-PVRs 110, which are connected to the hub 104.

In the preferred embodiment, the multi-transport stream receiver-transmitter 328 is adapted to encrypt content prior to modulating and transmitting the content. Typically, the content is encrypted using a cryptographic algorithm such as the Data Encryption Standard (DES) or triple DES (3DES), Digital Video Broadcasting (DVB) Common Scrambling or other cryptographic algorithms or techniques known to those skilled in the art. The multi-transport stream receiver-transmitter 328 receives instructions from the system controller 332 regarding the processing of programs included in the input transport streams 340. Sometimes the input transport streams 340 include programs that are not transmitted downstream, and in that case the system controller 332 instructs the multi-transport stream receiver-transmitter 340 to filter out those programs. Based upon the instructions received from the system controller 332, the multi-transport stream receiver-transmitter 328 encrypts some or all of the programs included in the input transport streams 340 and then includes the encrypted programs in the output transport streams 342. Some of the programs included in input transport stream 340 do not need to be encrypted, and in that case the system controller 332 instructs the multi-transport stream transmitter-receiver 328 to transmit those programs without encryption. The multi-transport streams receiver-transmitter 328 sends the DSCT-PVRs 110 the information used to decrypt the encrypted program. It is to be understood that for the purposes of this disclosure a "program" extends beyond a conventional television program and that it includes video, audio, video-audio programming and other forms of services and digitized content. "Entitled" DSCT-PVRs 110 and client receivers 122 are allowed to use the decryption information to decrypt encrypted content, details of which are provided hereinbelow.

The multi-transport stream transmitter/receiver 328 uses the MSK from the system controller 332 to encrypt service instances. The multi-transport stream transmitter/ receiver 328 includes an encryptor and a counter that produces a numerical value multiple times per minute. The encryptor uses the MSK to encrypt the counter value to produce a control word. The control word is used by the encryptor as a key for encrypting a portion of the service instance.

The multi-transport stream transmitter receiver 328 includes the counter value in an entitlement control message (ECM), which is multiplexed into the output transport stream 342. Typically, ECMs are transmitted without being encrypted so that the DSCT-PVRs do not have to spend time decrypting the content of the ECM before generating the control word. However, the ECMs include an authentication token that is used for authenticating the message content and limiting access thereto, as will be explained in detail hereinbelow. Typically, the authentication token is a hash digest of the message content and a secret that is shared with the DSCT-PVRs 110, and in that case, the ECM includes an identifier that the DSCT-PVRs 110 uses to identify the shared secret. Only DSCT-PVRs that have the MSK will be able to encrypt the counter value of the ECM to generate the control word that decrypts the service instance.

In the preferred embodiment, the hub 104, which functions as a mini-headend, includes many or all of the same components as the headend 102. The hub 104 is adapted to receive the transport-streams 342 included in the in-band path 354 and redistribute the content therein throughout its sub-distribution network 160. The hub 104 includes a QPSK modem array (not shown) that is coupled to communication links 152 and 154 for two-way communication with DSCT-PVRs 110 that are coupled to its sub-distribution network 160. Thus, it is also adapted to communicate with the DSCT-PVRs 110 that are coupled to its sub-distribution network 160, with the headend 102, and with the content providers 114.

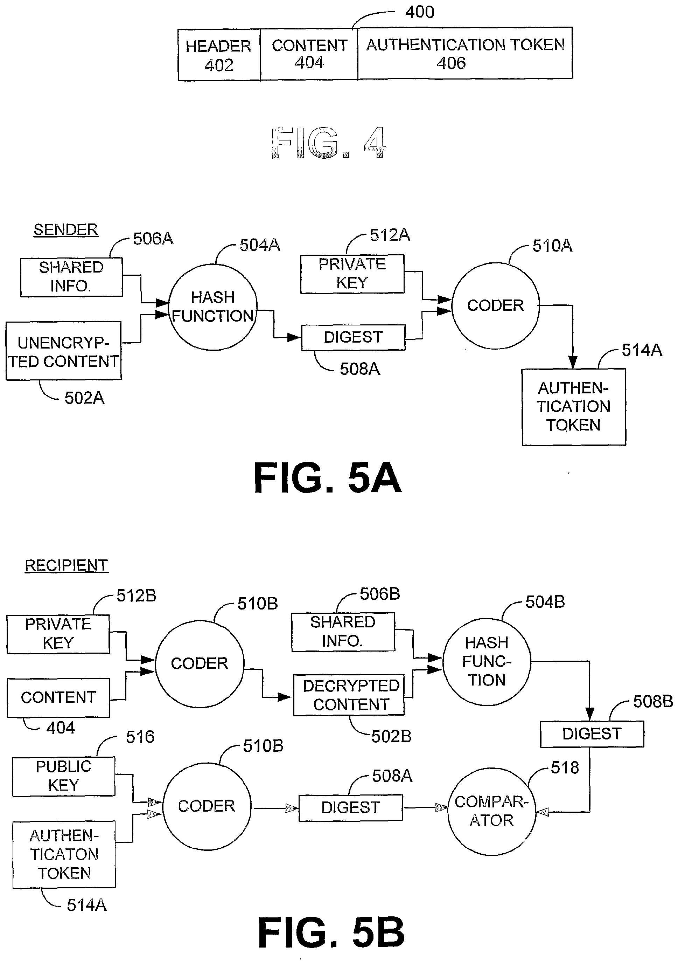

Refer to FIG. 4, a secure message 400 includes a header 402, content 404 and an authentication token 406. Messages such as EMMs, which are used to provide entitlements, rights, keys, and other cryptographic information of the STS 100 are generally transmitted from the headend to the DSCT-PVR 110 as secure messages 400. They are considered to be secure messages because the recipient of the message can determine that the message came from the purported sender and that the received content is the same as what the sender transmitted, i.e., the content was not corrupted during transmission and/or that the content was not tampered with. In addition, the content is generally encrypted so as to protect the privacy of the content.

The header 402 includes address information of the purported sender and the recipient. Some messages are broadcast to some or all of the DSCT-PVRs 110 in the STS 100, and in that case, the recipient address is a global address.

The content 402 is the information that the sender wishes to convey to the recipient. The information can include public keys of public key-private key pairs, multi-session keys (MSKs), secrets, entitlements, rights, and other information. Typically when the message 400 is being sent to a single DSCT-PVR 110, the content 404 includes encrypted content, which was encrypted using the public key of the recipient, and unencrypted content, which the recipient uses to identify a decryption key for decrypting the encrypted content. Only the intended recipient/DSCT-PVR 110 can decrypt the content because only the intended recipient/DSCT-PVR 110 has the private key for decrypting the encrypted portion of content 404.

The authentication token 406 is a digitally signed digest of at least a portion of the content 404. Typically, the hash digest includes as input a shared secret that is shared between the sender and the recipient.

In FIGs. 5A through 5C, objects (inputs and outputs) are depicted as rectangles and functions are depicted as circles. The system controller 232 includes the necessary logic for implementing the functions illustrated in FIGs. 5A through 5C, as does the DSCT-PVR 110. Refer to FIG. 5A, which illustrates the generation of an authentication token 514A by a sender, unencrypted content 502A is input into a hash function 504A along with shared secret or shared information 506A. The shared information 506A is information that the recipient of the secure message 400 has already been provided with in a previous secure message or by other means. Prior to transmitting the secure message 400, the unencrypted content 502A is encrypted and then included as at least a portion of the content 404 of the secure message 400.

The hash function 504A generates a hash digest 508A of the unencrypted content 502A and the shared information 506A. The hash digest 508A is then digitally signed (or coded) by a coder 510A using a private key 512A of a private key-public key pair belonging to the sender of the message 400. The output of the coder 510A is a digitally signed hash digest, which is also referred to as an authentication token 514A.

For the purposes of this disclosure a hash function is a one-way hash function, which is an operation where input is run through some mathematical operations to produce an output, the hash digest, which is a fixed length and which is probably unique. The hash digest has at least two properties: (1) determining the input to the hash function, given the hash digest, is virtually impossible or at least computationally difficult; and (2) a hash digest produced from a given input is essentially unique. In other words, the probability that two different inputs will result in the same output is extremely small. All of the hash digests discussed in this disclosure are generated from one-way hash functions.

Refer to FIG. 5B, when a recipient receives a secure message 400, the recipient reverses the process illustrated in FIG. 5A. The recipient first decrypts the encrypted content 404 using the recipient's private key 512B. A coder 510B, which can encrypt and decrypt, and sign and unsign (code and decode) objects, decrypts the encrypted content 404 and outputs decrypted content 502B. Typically, the decrypted content 502B includes a shared secret specifier, which identifies for the recipient the shared information 506A that was used in creating the digest 508A. The recipient uses the shared secret specifier to identify and retrieve "shared" information 506B, which is equivalent to the shared information 506A of the sender.

A hash function 504B generates a hash digest 508B using the shared information 506B and the decrypted content 502B as inputs.

Next, the recipient provides the coder 510B with the received authentication token 514A. When the coder 510A signed the digest 508A using the private key 512A, it converted the hash digest 508A from a first value to a second value. When the coder 510B processes the authentication token 514A with the public key 516, it converts the authentication token 514A back into the hash 508A, i.e., it processes the second value back to the first value, so long as the public key 516 is the public key for the private key 512B.

A comparator 518 receives the digest 508A, which was produced by the sender, and the digest 508B, which was produced by the recipient, and compares the two digests. If the digests 508A and 508B are the same, then the secure message came from the purported sender and the content has been neither corrupted nor tampered with, i.e., it is authentic.

### DSCT-PVR 110

Referring to FIG. 6, the DSCT-PVR 110 includes an input port 602, tuners 604, a demultiplexer 606, a transceiver 608, a memory 610, a processor 612, a secure element 614, a user-interface 616, a cryptographic device 618, an output port 622, the storage device 232, and a reformatter 626.

The DSCT-PVR 110 is adapted to receive in-band and out-of-band communication at the input port 602, and among other things, adapted to communicate with the headend 102 using the transceiver 608; receive services and record selected services in storage device 232; play recorded services 234 using the stored decryptors 236; and provide services to a subscriber device such as the TV 112 coupled to the DSCT-PVR 110 (see FIG. 1) via a communication link 628 extending from the output port 622.

The DSCT-PVR 110 is adapted to enable a subscriber to selectively record services and/or selectively play back recorded services. When the subscriber wants to record a service, the subscriber uses a user-input device (not shown), such as a remote control, to provide commands to the user interface 616. The processor 612 implements logic stored in memory 610 for recording and playing back recorded services. The subscriber is presented with a menu of programming selections for recording future or current services and for playing back recorded services 234. The programming/play menu is provided to the subscriber on a user display device, such as the television 112, and can be similar to how a user programs a current VCR.

The user-interface 616 can be, among other things, a keypad, an infrared receiver, or other interface known to those skilled in the art through which the user enters commands, such as selecting a "user-channel" for viewing a selected service instance. It is important to remember that a "user-channel" is not a conventional television channel. A conventional television channel in a cable television system is a 6 MHz band (which carries one analog program) centered on a particular frequency. However, today a "user-channel" can conceptually correspond to a service instance or a string of service instances in the preferred embodiment of the present invention. Frequently, multiple service instances are multiplexed together in a transport stream, and the transport stream is RF modulated and transmitted in a 6 MHz band. Thus, a single 6 MHz band carries multiple service instances or user-channels. When a user changes programs or service instances by selecting a new user-channel, the new user-channel and the old user-channel might be carried in the same 6 MHz band or in different 6 MHz bands. So it is important to distinguish between a conventional channel and a user-channel. It is to be understood user-channel represents one type of communication channel. Communication channels include, but are not limited to, communication signals that are separated by: frequency, which is generally referred to as frequency-division multiplexing (FDM); time, which is generally referred to as time-division multiplexing (TDM); and code, which is generally referred to as code-division multiplexing (CDM).

The transceiver 608 receives out-of-band communication 358 from input port 602. The out-of-band communication data includes among other things system tables and messages including secure messages 400 such as EMMs. EMMs are sent to the secure element 614 for processing and the system tables are stored in memory 610. The system tables are stored in memory 610 and include encryption tables, which identify, among other things, whether a program is encrypted or not. System tables are prepared by the system controller 332 and transmitted to the DSCT-PVR 110 via in-band or out-of-band communication paths.

The processor 612 receives the user-input from the user-interface 616 and determines the frequency band that contains a selected user-channel. Generally, the multiplexed service instances are in the form of MPEG programs. In that case, the processor 612 consults system information tables, which are stored in memory 610, to determine the frequency band of the selected user-channel and instructs the tuner 604 to tune to the desired frequency band.

The tuner 604 receives in-band communication from input-port 602, which is coupled to the transmission medium 154. In response to instructions from the processor 612, the tuner 604 tunes to the specified frequency band. When the specified frequency band carries an analog signal, the analog signal is provided to the output port 622. However, when the specified signal carries a stream of digital packets, the transport stream 342 is provided to the multiplexer/demultiplexer 606.

The multiplexer/demultiplexer 606 receives the transport stream 342 from the tuner 604 and extracts the PAT (PID=0) from the received transport stream. The processor 612 uses the PAT to determine the PMT for the selected user-channel and uses the PMT to determine the PID values of the elementary streams that make up the program carried in the selected user-channel. The multiplexer/demultiplexer 606 extracts the elementary streams of the service carried in the user-channel and sends the elementary streams to the cryptographic device 618 for immediate access by the subscriber. However, if the DSCT-PVR 110 is operating in record mode, the multiplexer/demultiplexer 606 sends the elementary streams to the to the storage device 232.

In one preferred embodiment, when the DSCT-PVR 110 is operating in record mode, the multiplexer/demultiplexer 606 receives decryptors 236 from the secure element 614. The multiplexer/demultiplexer 606 multiplexes the decryptors 236 with the elementary streams that make up the service being recorded and provides the elementary streams and the decryptors 236 to the storage device 232. In another preferred embodiment, when the subscriber is recording a service, the multiplexer/demultiplexer 606 sends the elementary streams that make up the service and ECMs associated with the service to the storage device 232, and in that case, the ECMs are decryptors 236.

If the subscriber is not recording the service, but is instead presently accessing the service, the processor 612 uses the encryption table stored in memory 610 to determine whether the elementary streams are encrypted. When the elementary streams are encrypted, the cryptographic device decrypts them using decryption information, control words, from the secure element 614. Elementary streams that are not encrypted pass through the cryptographic device 618 to the reformatter 626.

The secure element 614 is used for, among other things, providing the cryptographic device 618 with the control words used for decrypting the selected service instance. It is important to note that in the conditional access system of the STS 100 the DSCT-PVR 110 might not be able to access a selected service instance even though the DSCT-PVR 110 has the necessary keys used for decrypting the selected service instance. In other words, in addition to having all the keys used in accessing the selected service instance, the DSCT-PVR 110 must be "entitled" to access the selected service instance. The DSCT-PVR 110 receives entitlements for service instances from the Entitlement Generator 336 of the system controller 332.

The secure element 614 includes a processor 630 and a memory 632, which are enclosed in tamper resistant packaging. The memory 632 includes entitlements that the DSCT-PVR 110 has been granted to selectively access services, rights, and a private key of a public key-private key pair belonging to the DSCT-PVR 110. The memory 632 is accessible only to the processor 630 so as to protect the private key belonging to the DSCT-PVR 110.

The memory 632 also includes at least one trusted public key belonging to a trusted authority such as the operator of the STS 100. In one preferred embodiment, a trusted public key is used for establishing an entitlement agent, i.e., providing the entitlement agent's public key to the DSCT-PVR 110 and establishing parameters for which the entitlement agent must operate with regard to the DSCT-PVR 110.

The operator of the STS 100 establishes an entitlement agent with the DSCT-PVR 110 using EMMs that are assigned by the private key of the operator. The processor 630 uses the trusted public key to authenticate the EMMs from the operator of the STS 100, and if the EMMs include encrypted content, the processor 630 uses the private key of the DSCT-PVR 110 to decrypt the content. Typically, an entitlement agent is established by a series of EMMs, which provide the DSCT-PVR 110 with the public key of the entitlement agent, allocate a portion of the memory 632 to the entitlement agent, and establish operating parameters for the entitlement agent. The DSCT-PVR 110 considers the public key of the entitlement agent as genuine because it came in an EMM that was signed by the operator of the STS 100.

After the entitlement agent has been established with the DSCT-PVR 110, the entitlement agent sends entitlements, shared secrets, and multi-session keys (MSKs) to the DSCT-PVR 110 using EMMs. The processor 630 authenticates the EMMs as having come from the established entitlement agent using the public key of the entitlement agent. If the EMMs are authentic, the processor 630 stores the entitlements, shared secrets, and the MSKs in the memory 632.

In one preferred embodiment, the memory 632 includes a bitmap for storing entitlements. Each bit of the bit map is set to one of two predetermined values representing either entitled or not entitled and each bit is associated with a service. When a subscriber attempts to access a particular service, the processor 630 uses the SID 222 of the ECM 216 for the particular service to check the bit associated with that the particular service. If the bit is set to not entitled, the control word is not provided to the cryptographic device 68. However, if the bit is set to entitled, the secure element 614 provides the cryptographic device 618 with the control word used for decrypting the selected service instance. The cryptographic device 618 decrypts the selected service instance using the control word from the secure element 614 and the decrypted service instance is sent to the output port 622.

As previously described hereinabove, PATs 212 and PMTs 214 are used by the processor 612 to identify the PID values of the elementary streams of a user selected service and for identifying the PID values of ECMs 216 for the selected service. The ECMs 216 are provided to the processor 630, which uses the authentication token 230 to authenticate the ECM 216. In one embodiment, the processor 630 uses a portion of the payload 210 of the ECM 216 and a shared secret to generate a hash digest, and then compares the authentication token 230 with the generated hash digest. If the two are the same, the processor 630 determines the ECM is authentic, and then determines whether the DSCT-PVR 110 is entitled to access the user-selected service. If it is entitled, then the processor 630 uses the key identifier 224 to retrieve a particular MSK stored in memory 632. The processor 630 uses the MSK along with the DKM 226 to generate a control word for decrypting packets 204 carrying a portion of the selected service.

It should be noted that the control words are provided to the cryptographic device 618 only if the DSCT-PVR 110 is entitled to access the selected service. Thus, the DSCT-PVR 110 can have all the necessary information for generating a control word such as the appropriate MSK and the DKM 226, but it will still not be able to access the selected service unless it is entitled.

In one embodiment, encrypting the DMK 226 using the MSK, generates a control word. Typically, the DKM 226 is a counter value that is transmitted in the ECM without encryption. Encrypting the counter value produces an output, the control word, which is essentially a random number. In another embodiment, a control word is generated by decrypting the DKM 226 using the MSK as a key. Decrypting the DKM 226 converts the DKM from an encrypted value into a clear text value (the control word) and in this embodiment the clear text value was generally produced by a random number generator.

The reformatter 626 receives the decrypted service from the cryptographic device 618, and if the output port 622 is coupled to a VCR or TV, the reformatter 626 reformats the content from an MPEG format to an NTSC format. The reformatter 626 can also reformat the content to other formats appropriate for display on a computer or other user display device. Alternatively, in one embodiment, the content from the cryptographic device 618 can be sent directly to the output port 622 without being reformatted.

### Embodiment 1

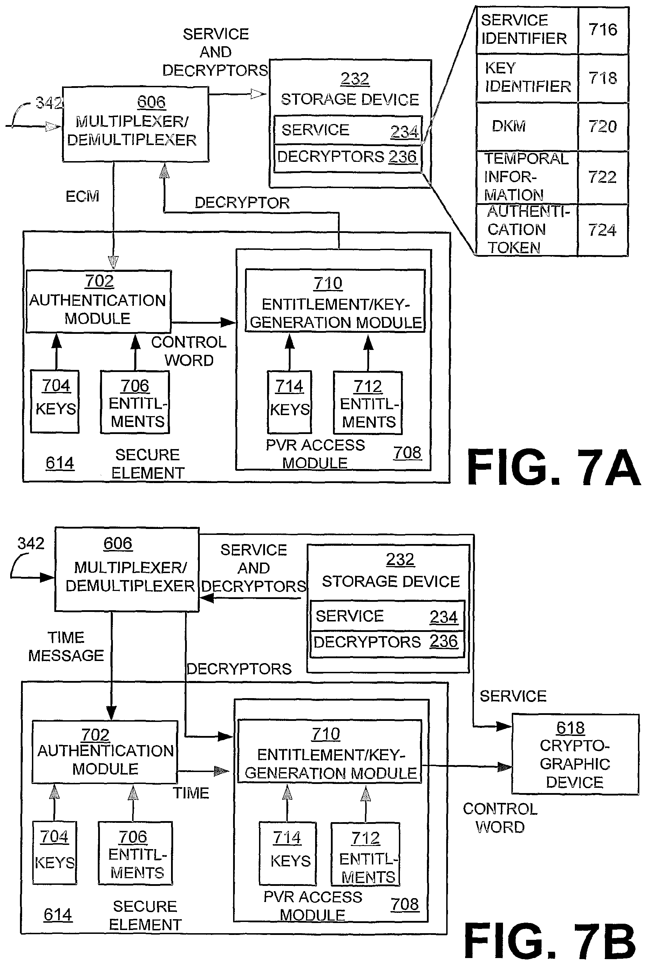

FIG. 7A illustrates the flow of packets 204 (see FIG. 2) carrying a portion of a selected service and packets carrying ECMs 216(see FIG. 2) as a selected service is being recorded in the storage device 232 (see FIG. 2). FIG. 7B illustrates the flow of packets 204 (see FIG. 2) as the recorded service 234 (see FIG. 2) is played. Functional components/modules of the secure element 614, which are embodied in the processor 630 and memory 632, are illustrated in FIG. 7A and 7B. The functional components include an authentication module 702, and PVR access module 708, which includes a PVR entitlement-key generator module (EKG) 710. Also included the secure element 614 are keys 704, entitlements 706, PVR keys 714, and PVR entitlements 712. The keys 704, entitlements 706, and PVR entitlements 712 are assigned to the DSCT-PVR 110 by the system controller 332. The PVR keys 714 are typically generated at the DSCT-PVR 110 by a random number generator (not shown) or, alternatively, assigned to the DSCT-PVR 110 by the system controller 332.

In this embodiment, the multiplexer/demultiplexer 606 receives the transport stream 342 and extracts the packets carrying the elementary streams of the user selected service and the ECMs 216 associated with the selected service from the transport stream 342. The ECMs 216 are sent to the secure element 614, which processes them and generates decryptors 236 that are sent to the multiplexer/demultiplexer 606. The multiplexer/ demultiplexer 606 sends the elementary streams along with the decryptors 236 to the storage device 232.

The authentication module 702 authenticates an ECM 216 using the authentication token 230 of the ECM 216, as previously described hereinabove. In the case where the authentication token 230 is a digest of message content and a shared secret, the corresponding shared secret is stored in keys 704. The authentication module 702 includes an entitlement verifier that uses the service identifier 222 and entitlements 706 to verify that the DSCT-PVR 110 is entitled to access the selected service. Responsive to the DSCT-PVR 110 being entitled, the authentication module 702 uses the key identifier 224 to retrieve a specific key (MSK) from the keys 704.

The authentication module 702 includes a control word generator module that processes the DKM 226 along with the retrieved MSK from key 704 to generate a control word. As previously described, the DKM 226 is either encrypted or decrypted with the MSK to generate the control word which is then passed to the PVR access module 708.

The PVR access module 708 receives the control word and generates a decryptor 236. The decryptor 236 includes a service identifier 716 that identifies the service that is being recorded, a key identifier 718, decryptor key material (DKM) 720, temporal information 722, and an authentication token 724. The EKG module 710 receives the control word and first uses a PVR key 714 along with the control word as inputs to a hash function. The output of the hash function is the authentication token 724 for the decryptor 236. In another embodiment, the authentication token is the output of a hash function that includes at least a portion of the control word, and other information such as temporal information 722 as inputs.

Next, the EKG module 710 uses a key from PVR keys 714 to encrypt the control word thereby converting the control word into DKM 720. Generally, it is preferred to encrypt the control word using a symmetric encryption algorithm such as, but not limited to, DES or 3DES because, as those skilled in the art will recognize, symmetrical encryption algorithms are generally faster than asymmetrical encryption algorithms such as RSA. However, that not withstanding, the DKM 720 can be produced by encrypting the control word using either symmetrical or asymmetrical encryption algorithms.

The DKM 720 and authentication token 722 are then included in the decryptor 236. The decryptor 236 is formatted according to protocols consistent with the formatting of the packets carrying the selected service. Typically, the decryptor 236 is formatted according to MPEG protocols such that the decryptor 236 is an MPEG packet.

In this embodiment the temporal information 722 defines a time span over which the DSCT-PVR 110 is entitled to access the selected service that is being recorded. Typically, the temporal information 722 includes a beginning and ending entitlement time, or a reference time and an entitlement length. In that case, the entitled time span is defined as the reference time plus (or minus) the entitlement length.

In one embodiment, the entitled time span is one of the menu selections that the subscriber makes when the subscriber programs the DSCT-PVR 110 to record the service. The menu options present the subscriber with different rental periods: one day; three days; one week; etc. The rental period is included in the billing information, which is then sent to the controller 332.

In yet another embodiment, the temporal information defines an entitled time span of a predetermined length. Typically, the system controller 332 predetermines the entitled time span. The entitled time span is transmitted to the DSCT-PVR 110 using EMMs and stored in the memory 632 of the secure element 614. Alternatively, in another embodiment, the entitled time span is transmitted in packets that are received along with the ECMs and service.

Refer to FIG. 7B, when the subscriber attempts to access the recorded service 234, the multiplexer/ demultiplexer 606 extracts time-messages 220 from the transport stream 342 and sends them to the authentication module 702. The packets 204 that make up the recorded service 234 and the decryptors 236 are sent to the multiplexer/demultiplexer 606, which also demultiplexes the decryptors 236 from the recorded service 234 and sends the decryptors 236 to the EKG module 710. The packets 204 carrying the recorded service 234 are sent to the cryptographic device 618.

The authentication module 702 authenticates that the time-message 220 is authentic by comparing an authentication token 230 included in the time-message 220 with a generated hash digest. The generated hash digest is the output of a hash function having at least a portion of the content of the time-message and a secret as inputs. If the time-message 220 is authentic, the authentication module provides the current time to the EKG module 710.

The EKG module 710 first authenticates the decryptor 236, which it receives from the multiplexer/demultiplexer 606. Using information included in the decryptor 236 and a secret from key 714 of the EKG module 710, the EKG module 710 generates a hash digest and compares the hash digest with the authentication token 724. The decryptor 236 is authentic if the hash digest and the authentication token 724 are the same. If the decryptor 236 is authentic, the EKG module 710 uses, among other things, the temporal information and the current time to determine whether the entitled time span for the recorded service 234 has expired. It should be noted that the temporal information 722 could define a future entitled time span. In that case, the recorded service 234 can be recorded in the storage device 232 and then released to the subscriber at a predetermined release date. If the current time is within the entitled time span defined by the temporal information 722, the EKG module 710 uses entitlements 712 and SID 716 to determine whether the DSCT-PVR 110 is still entitled to access the recorded service 234.

If the DSCT-PVR 110 is still entitled the EKG module 710 uses the DKM 720 and a specific key from keys 714, the specific key is identified by the key identifier 718 of the decryptor 236, and decrypts the DKM 720. Decrypting the DKM 720 converts the DKM 720 into a control word, which is then sent to the cryptographic device 618 for decrypting the packets of the recorded service 236.

It should be noted that if the DSCT-PVR 110 is not entitled to access the selected service when the subscriber attempts to record it, or is no longer entitled to access the recorded service 234, the DSCT-PVR 110 is adapted to send a message to the headend requesting that the DSCT-PVR 110 be so entitled. If the system controller 332 so decides, it will entitle the DSCT-PVR 110 using EMMs. Once the DSCT-PVR 110 is entitled, the subscriber can record the service or play back the recorded service 234.

### Embodiment 2.

In this alternative embodiment, the DSCT-PVR 110 no longer determines whether it is entitled to record the selected service. Instead, the processor 612 instructs the multiplexer/ demultiplexer 606 to pass the ECMs 216 associated with the selected service and the elementary streams of the selected service to the storage device 232. In this embodiment, the stored decryptors 236 are the ECMs that were generated at the headend 102.

The steps performed by components of the DSCT-PVR 110 to access the recorded service 234 are generally the same as illustrated in FIG. 7B and will not be described in detail again. A distinction between the first embodiment and the second embodiment is that the decryptors 236 are generated at the DSCT-PVR 110 in the first embodiment and the decryptors 236 are generated at the headend 102 in the second embodiment. Consequently, instead of using a key from keys PVR 714 to generate a control word, the MSK from keys 704 is provided to the EKG module 710 if the DSCT-PVR 110 is entitled to access the recorded service. To be entitled, the time-messages 220 must be authentic, the decryptors (ECMs) 236 must be authentic, the current time must be within the time span defined by the temporal information 722, and the value of the entitlement 712 must be set to entitled.

An advantage of the first embodiment is that the temporal information 228 of the ECM need not define an entitled time span over which the DSCT-PVR 110 is entitled to access the recorded service 234 because the time span can be included in the decryptor 236 when it is generated at the DSCT-PVR 110, thereby conserving bandwidth by sending less information downstream in the ECMs 216.

Another advantage of the first embodiment is that the user can determine the entitled time span before the user records the service. Again, this advantage comes from the fact that the decryptors 236 are generated at the DSCT-PVR 110.

However, an advantage of the second embodiment is that the DSCT-PVR 110 does not need to check its entitlements before recording the selected service. Thus, requiring less processing by the DSCT-PVR 110.

In addition, the second embodiment requires less processing at the DSCT-PVR 110 because the decryptors 236 (ECMs 216) are generated at the headend.

In addition, an advantage of the second embodiment is that a subscriber can record a service before being entitled to access the service. Thus, the subscriber can record a service to which he is not currently entitled to access, and then in the future, determine whether he wants to seek the entitlements to the recorded service. At which point in time, the subscriber can then request entitlement to the service from the headend 102 and be billed appropriately.

### Embodiment 3.

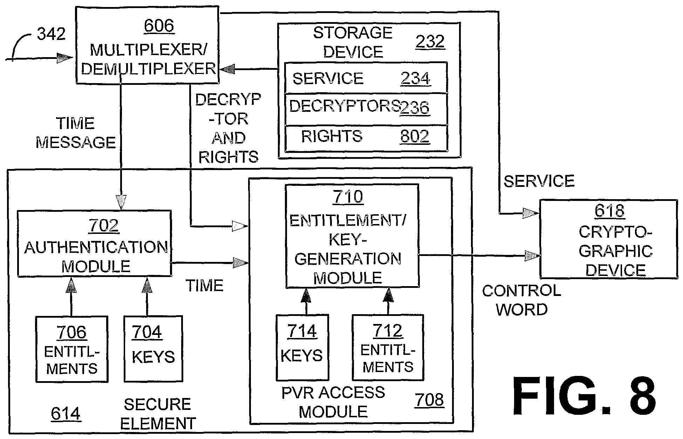

In this embodiment, the like number items of FIGs. 7A, 7B and 8 are the same and shall not be described again.

Refer to FIG. 8, in addition to storing the recorded service 234 and decryptors 236, the storage device 232 also stores Rights messages 802, which are transmitted from the headend 102. It should be noted that in this embodiment, the recording of the selected service could be implemented according to embodiment 1 or embodiment 2. Furthermore, it should be noted that the Rights messages 802 could be transmitted from the headend 102 as either in-band communication multiplexed into the transport stream 342 or out-of-band communication. If the Rights messages 802 are transmitted as in-band communication, the PMT 214 for the selected service includes the PID value that identifies the packets 204 that carry the Rights messages 802. The multiplexer/demultiplexer 606 extracts the Rights Packets from the transport stream 342 and sends them to the storage device 232. On the other hand, if the Rights messages are transmitted as out-of-band communication, the transceiver 608 sends the Rights messages to the storage device 232.

The Rights messages 802 include an authentication token that is a digitally signed output of a hash function, which was digitally signed by the private key of the system controller 332. Typically, the private key belongs to the operator of the STS 100, however, in one embodiment, the private key belongs to the entitlement agent that provides the DSCT-PVR 110 with entitlements to the selected service associated with the Rights message 802. Non-limiting examples of rights included Rights message 802 include detached viewing, buying/copying, and extended viewing.

When the subscriber attempts to access the recorded service 234, the time-message 220, the decryptors 236, and the Rights messages 802 are provided to the secure element 614. The control word for decrypting packets of the recorded service 234 is only given the cryptographic device 618 if all of the messages are authenticated, and only if the DSCT-PVR 110 is currently entitled and has the right to perform the functions requested by the subscriber. For example, when the subscriber attempts to access the recorded service 234, the subscriber is given various options such as Play or Copy. However, to operate in Copy mode the DSCT-PVR 110 checks the Rights messages 802 to determine whether the DSCT-PVR 110 has been authorized to copy the recorded service 234. The content of the recorded service 234 is decrypted and provided to an external storage device such as a DVD burner (not shown) via output port 622 only if the Rights messages 802 includes Copy permission and is authentic.

In addition, rights included in the Rights message 802 can include detached viewing, and in that case, the secure element 614 is adapted to check the Rights message 802 and generate the control word without receiving the time-message 220. However, if the Rights message 802 does not include detached viewing rights, then the control word is not provided to the cryptographic device 618 if the secure element 614 does not receive the time-message 220.

Furthermore, rights included in the Rights message 802 can include temporal information that defines an entitled time span. Typically, the temporal information of Rights message 802 defines an extended viewing right that extends the original entitled time span for the recorded service 234. However, the temporal time span of Rights message 802 can define the original entitled time span. For example, instead of including the temporal information that defines an entitled time span in an ECM 216, the temporal information is transmitted as in-band information to the DSCT-PVR 110 as Rights messages 802. In this example, the decryptor 236 would not need to include the temporal information 722 because the entitlement time span is then defined by the temporal information included in the Rights message 802.

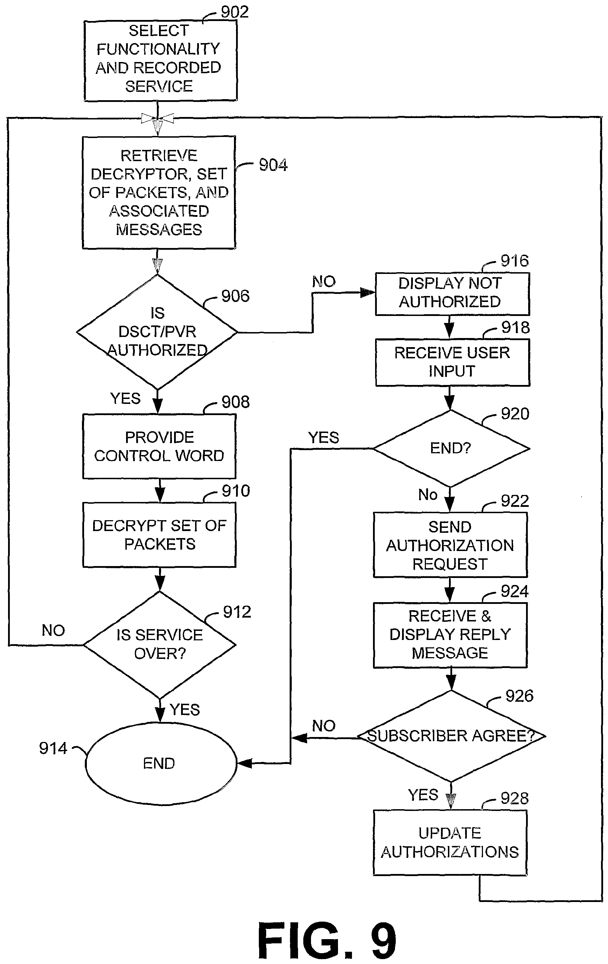

Refer to FIG. 9, which illustrates exemplary steps to access the recorded service 234, the subscriber attempts to access the recorded service 234 in step 902. In the preferred embodiment, the subscriber is given a menu of recorded services from which he chooses which of the recorded service he wants to access. The menu is displayed on a user display device, such as the television 112 and the subscriber uses a subscriber input device (not shown) for inputting his selection. In addition to the user choosing which recorded service 234 to access, the subscriber may also provide other information such as whether he desires to buy (or copy) or rent the selected service.

In step 904, a portion of the selected recorded service 234 is retrieved from the storage device 232 along with at least one decryptor 236 associated with that portion of the selected service. Other service information such as recorded Rights messages 802 and other recorded messages are also retrieved from storage device 232.

In step 906, the DSCT-PVR 110 determines whether it is authorized to access the selected service in the manner chosen by the subscriber. The DSCT-PVR 110 needs different authorizations for different functionality. For example, the authorizations (entitlements and rights) to copy the selected service are different from the authorizations for playing the selected service.

If the DSCT-PVR 110 is authorized, then in step 908, the secure element 614 provides the control word, which was generated, from the retrieved decryptor 236, to the cryptographic device 618. In step 910, the cryptographic device 618 uses the control word to decrypt the retrieved packets and sends the decrypted packets to the reformatter 626. The reformatter 626 reformats, or not, the content of the decrypted packets according to the type of user device coupled to the output port 622.

In step 912, the DSCT-PVR 110 determine whether the service is over, i.e., whether the retrieved set of packets were the last set of packets of the recorded service 234. If the service is not over, the DSCT-PVR 110 proceeds back to step 904. On the other hand, when the service is over, the DSCT-PVR 110 ends the process at step 914.

Refer back to step 906, when the DSCT-PVR 110 is not authorized, then in step 916, the DSCT-PVR 110 informs the subscriber that the DSCT-PVR 110 is not authorized. The DSCT-PVR 110 may not be authorized if the subscriber selected to copy the recorded service 236, and the subscriber had never purchased the right to copy, or if the entitlement time of the recorded service has expired. The subscriber is told why the DSCT-PVR 110 is not authorized and is given options for seeking authorization or ending the attempt to access the selected-recorded service 234. Typically, the subscriber is given the cost of seeking the necessary authorization. For example, extending the rental period for the recorded service 234 for another week maybe $4.99, and for another month the cost may be $10.99.

In step 918, the DSCT-PVR 110 receives the subscriber's input, and in step 920, the DSCT-PVR determines whether the subscriber wishes to end his attempt to access the recorded service 234.

If the subscriber decided to continue, the DSCT-PVR 110 sends a secure message 400 to the headend 102 requesting the necessary rights and/or entitlements to access the recorded service 234. At the headend 102, the system controller 232 receives the secure message and processes the request. Processing the request includes authenticating the message, and determining whether the system operator is authorized to grant the requested authorizations. For example, the subscriber may have requested that the rental period be extended for another thirty days, but the operator may only be able to extend the rental period for another week. In either case, the system controller 332 creates and sends a reply message, which is a secure message 400 that includes authorizations for the DSCT-PVR 110. Preferably, the authorizations of the reply message are the requested authorizations; however, the authorizations of the reply message could also be different from the requested authorizations.

In step 924, the DSCT-PVR 110 receives the reply message. The secure element 614 processes the reply message using its private key to decrypt the content 404 and the public key of the system controller 232 as part of authenticating the reply message. The reply message is displayed to the subscriber if the reply message was authentic. Otherwise, a non-authorized message is displayed.

In step 926, the subscriber inputs his acceptance of the terms of the requested authorizations. If he does not agree to the terms, the DSCT-PVR 110 ceases its attempts to access the recorded service 234 by proceeding to step 914. On the hand, if the subscriber accepts the terms, then in step 928, the rights and entitlements of the DSCT-PVR 110 are updated, and the reply message is stored in the storage device 232.

In an alternative embodiment, before the headend sends the reply message to the DSCT-PVR 110, the headend 110 sends a message that includes the terms for authorizing the DSCT-PVR 110. The subscriber agrees to the terms sending another message to the headend 110 acknowledging his consent. Only after the subscriber has agreed to the terms does the headend 110 send the reply message with the rights and entitlements to the DSCT-PVR 110.

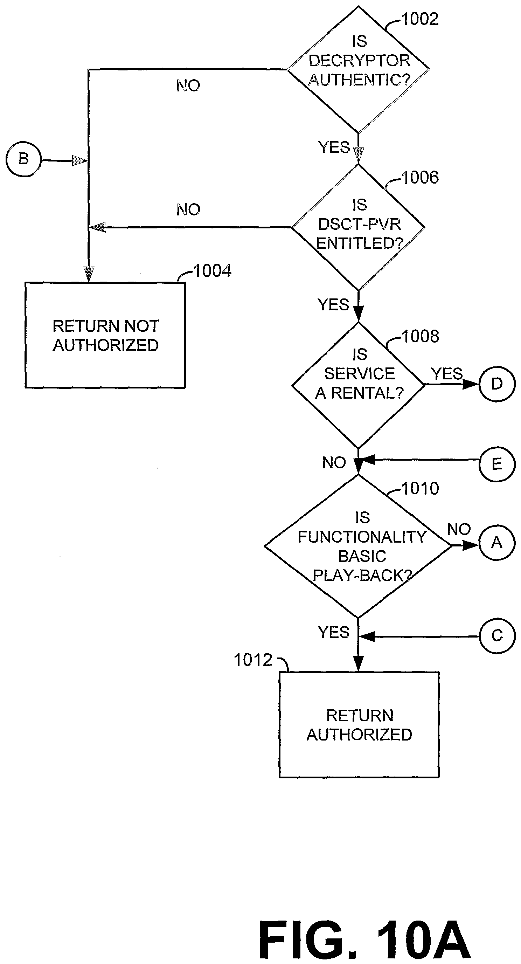

Refer to FIGs. 10A through 10C, steps 1000 are exemplary steps taken by the secure element 614 for implementing step 906. In step 1002, the secure element determines whether the decryptor is authentic, and if not, it proceeds to step 1004 where it returns "not authorized." As previously described hereinabove, the decryptor includes an authentication token, which is the output of a hash function having decryptor content and other information as input. To authenticate the decryptor, the secure element 614 uses at least a portion of the decryptor and other information as inputs to a hash function, which then generates a hash digest, and compares the hash digest with the authentication token. If they are the same, the decryptor is authentic and the secure element proceeds to step 106.

The secure element 614 checks the entitlement setting that is associated with the recorded service 234 and determines therefrom whether the DSCT-PVR 110 is entitled to access the recorded service 234. If not, it proceeds to step 1004. On the other hand, if the DSCT-PVR 110 is entitled, then the secure element 614 proceeds to step 1008 and determines whether the recorded service 234 is a rental. If the recorded service is not a rental, the secure element 614 proceeds to step 1010.

In step 1010, the secure element 614 determines whether the user requested functionality of the DSCT-PVR 110 is basic playback functionality, and if so, the secure element 614 proceeds to step 1012 and returns "authorized." On the other hand, when the subscriber wants his DSCT-PVR 110 to function beyond its basic functionality, such as, but not limited to, playing the recorded service 234 when detached from the STS 100, or copying the recorded service, then the DSCT-PVR 110 must have the appropriate right to extend its functionality.

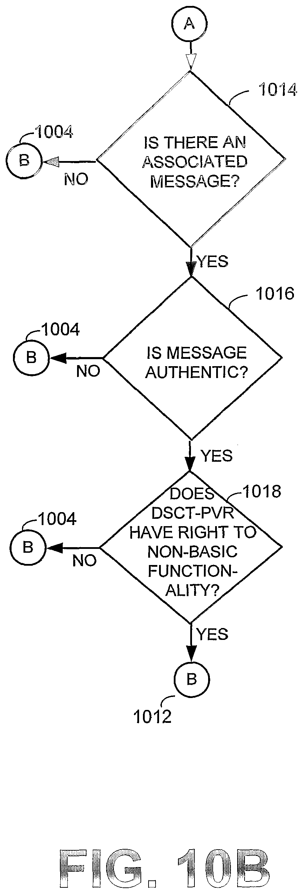

Refer to FIG. 10B, responsive to determining that the requested functionality of the DSCT-PVR 110 is not basic playback, the secure element 614 proceeds to step 1014 and determines whether there is an associated message that extends the rights of the DSCT-PVR 110. Associated messages can be stored with the recorded service 234 in the storage device 232 or in the memory 632. If there is no message associated with the recorded service 234, then the secure element proceeds to step 1004 and returns "not authorized." On the other hand, if there is an associated message and the message is a Rights message giving the DSCT-PVR 110 the necessary right to extend its functionality, then in step 1016 the secure element 614 determines whether the Rights message is authentic.

Typically, Rights messages are secure messages 400, which use encryption to keep the content 404 private and an authentication token 406 for providing a way of verifying the authenticity of the message. The authentication token is generally a digitally signed hash digest, and the secure element uses the public key of the signer to verify the signature of the purported sender and its own private key to decrypt the content 404. Alternatively, a symmetrical key that is known to both the sender and the DSCT-PVR 110 can encrypt and decrypt the content 404.

In another embodiment, a Rights message could be akin to an ECM 216, except that it would include an authorization token that was signed by the system controller 332. In this embodiment, the content of the Rights message would not be encrypted using a public key because the Rights message would be broadcast through the STS 100 to multiple DSCT-PVRs 110. In that case, if the content of the Rights message is encrypted, it is encrypted using a key that is known to both the system controller 332 and the DSCT-PVRs 110. For example, the system controller 332 could encrypt the content using the MSK.

Responsive to the Rights message being authentic, in step 1018 the secure element determines whether the Rights message grants the requested functionality. If the Rights message grants the DSCT-PVR 110 the right to perform the user-selected functionality, the secure element proceeds to step 1012 (see FIG. 10A) and returns "authorized," otherwise it proceeds to step 1004 and returns "not authorized."

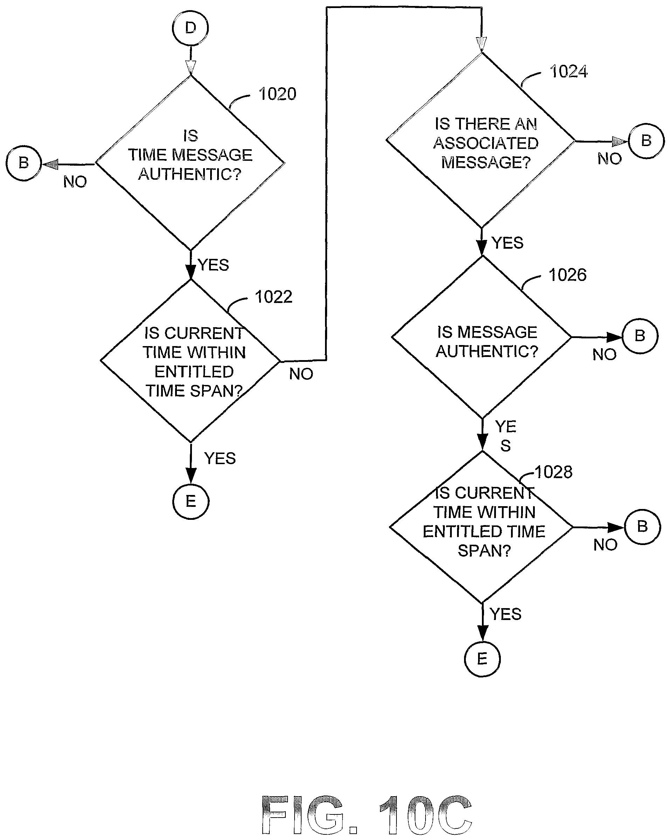

Referring back to step 1008, responsive to the recorded service 234, being a rental, the secure element 614 proceeds to step 1020 (see FIG. 10C) and determines whether a time-message 220 that was transmitted from the headend 102 is authentic. If the time-message is not authentic, the secure element 614 proceeds to step 1004 (see FIG. 10A). On the other hand, the secure element 614 proceeds to step 1022 if the time-message is authentic and determines whether the time of the time-message is within the entitled time span for the recorded service 234. Typically, the entitled time span is defined by the temporal information of the decryptor 236, but in an alternative embodiment, the entitled time span can also be stored in the memory 632 of the secure element 614. If the current time is within the entitled time span, the secure element proceeds to step 1010 (see FIG. 10A).

On the other hand, responsive to the time not being within the entitled time span, the secure element 614 proceeds to step 1024 and determines whether there is an associated message, such as a Rights message, that is associated with the recorded service 234. If there is an associated message, the secure element 614 proceeds to step 1026 and determines whether it is authentic. Responsive to the message being authentic, in step 1028 the secure element 614 determines whether the current time is within an entitled time span defined by the Rights message. The entitled time span can be then time span for which the DSCT-PVR 110 was originally entitled or it may be an extension of the original entitled time span. If the current time is within the entitled time span, the secure element 614 proceeds to step 1010.

In steps 1024, 1026 and 1028, responsive to a negative result; there is no associated message; the associated message is not authentic; or the current time is not within the extended time span, respectively, the secure element 614 proceeds to step 1004.

Typically, Rights messages 802 of this third embodiment are used to extend subscriber access and DSCT-PVR 110 functionality beyond what was granted when the recorded service 234 was recorded. The DSCT-PVR 110 uses the Rights messages in conjunction with decryptors and entitlements and when appropriate in conjunction with time-messages to determine whether the DSCT-PVR 110 should access the recorded service 234 as requested by the subscriber. For example, if the subscriber does not own the recorded service 234, the DSCT-PVR 110 may allow him to access the recorded service 234 to play on a TV but not to copy it because he does not have that right.

### Embodiment 4.

In this embodiment, the DSCT-PVR 110 generates a challenge, which is transmitted to the system controller 332 when the subscriber attempts to access the recorded service 234. The secure element 614 generates a random number, which is the challenge, retains the challenge in memory, and sends a copy of the challenge to the system controller 332 in a secure message. The system controller 332 authenticates the challenge message and generates a reply message, which is a secure message. The content 404 of the reply challenge message includes the challenge and the current time. Typically, the content 404 is encrypted using the public key of the DSCT-PVR 110 by the system controller 332. Alternatively, a key such as an MSK that is known to both the system controller 332 and the secure element 614 is used to encrypt the content. The system controller 332 sends the reply challenge message, which includes an authentication token that was digitally signed by the system controller 332, to the DSCT-PVR 110.

The secure element 614 of the DSCT-PVR 110 decrypts the content and authenticates the reply challenge message, and compares the challenge of the reply challenge message with the random number retained in memory 632. The reply challenge message is authenticated using the challenge and the authentication token. If the reply challenge message is not authentic, the secure element 614 will not provide the control word to the cryptographic device 618 for decrypting the recorded service 234. In addition, the secure element 614 uses the current time of the reply challenge message as a reference time and compares the current time of time-messages 220 against the reference time. The secure element 614 will not provide control words to the cryptographic device 618 when the current time of a time-message 220 is earlier than the reference time. The reference time prevents a subscriber from replaying earlier time-messages to access a recorded service 234 that has an expired entitled time span. The secure element 614 cannot be tricked by time-messages that are replayed into believing that the current time is within the expired time span because the purported current time of the replayed time-messages will be earlier than the reference time.

### Embodiment 5.

In this embodiment, the DSCT-PVR 110 generates a rights-challenge message, which is transmitted to the system controller 332 when the subscriber attempts to access the recorded service 234. The secure element 614 generates a random number, which is the challenge, and retains the random number in memory 632. The secure element 614 generates a right-challenge message, which is a secure message having an encrypted content 404 and authentication token 406. The encrypted content of the rights-challenge message includes the challenge and rights of the DSCT-PVR 110, and the content is encrypted using either the public key of the system controller 332 or a key common to both the system controller 332 and the secure element 614 such as an MSK. The rights-challenge message is transmitted to the system controller 332, which decrypts the encrypted content 404 and uses the decrypted content, the public key of the DSCT-PVR 110, and the authentication token 406 to authenticate that the DSCT-PVR 110 was the actual sender and that the received content is correct. The system controller 332 determines new rights for the DSCT-PVR 110. The new rights can be the same as the rights already granted to the DSCT-PVR 110, or a further extension of granted rights including granting rights previously not granted, or a contraction of granted rights including denying rights previously granted.

The system controller 332 includes the new rights along with the challenge in a reply rights-challenge message, which is a secure message having an authentication token. The system controller 332 generates the authentication token by inputting at least a portion of the content of the reply rights-challenge message, and possibly a shared secret, into a hash function and digitally signing the output using the private key belonging to the system controller 332. The content of the reply rights-challenge message is then encrypted using either the public key of the DSCT-PVR 110 or a shared key such as an MSK. The reply rights-challenge message is then transmitted out-of-band to the DSCT-PVR 110.

The secure element 614 of the DSCT-PVR 110 receives the reply rights-challenge message and decrypts the content 404. Next, the reply rights-challenge message is authenticated using the public key of the system controller 332, the authentication token, at least a portion of the decrypted content 404, and a shared secret if a shared secret was used by the system controller 332 in generating the authentication token 406. Responsive to the reply rights-challenge message being authentic, the secure element 614 compares the challenge included in the reply rights-challenge message with the random number retained in memory 632 and updates the rights 802 with the new rights included in the reply rights-challenge message if random number and the challenge are the same. The secure element 614 provides a control word to the cryptographic device 618 only if: the reply rights-challenge message was authentic; the returned challenge was the same as the random number retained in memory 632; and if the new rights authorize the DSCT-PVR 110 to access the recorded service 236.

In this embodiment a subscriber can initially record a service without having the right to access the service. The right to access the recorded service can be granted in the reply rights-challenge message when the subscriber attempts to access the recorded service 234.

Although exemplary preferred embodiments of the present invention have been shown and described, it will be apparent to those of ordinary skill in the art that a number of changes, modifications, or alterations to the invention as described may be made, none of which depart from the scope of the present invention as defined in the attached claims. Changes, modifications, and alterations should therefore be seen as within the scope of the present invention. For example, in another alternative embodiment, the DSCT-PVR includes a clock for providing the current time to the secure element 614. Preferably, the clock is included in the secure element and cannot be reset by the subscriber. The secure element 614 would then use the time from the clock for determining whether the current time is within an entitled time span for a given service. It should also be emphasized that the above-described embodiments of the present invention, particularly, any "preferred embodiments" are merely possible non-limiting examples of implementations, merely setting forth a clear understanding of the principles of the inventions. The scope of the invention is limited by the appended claims. The embodiments which do not fall within the scope of the claims are to be interpreted as examples.

## Claims

1. A method of accessing a recording of a digital service on a settop, the settop being in communication with a digital subscriber system having a headend, the method comprising the steps of:
retrieving (904) a given decryptor and a set of packets from a storage device, the set of packets carrying a portion of a digital service, wherein the storage device has multiple sets of packets and multiple decryptors stored therein, each decryptor associated with a particular set of packets, and the multiple sets of packets make up the digital service, wherein each decryptor includes at least temporal information defining a time-span during which the settop is entitled to access the digital service from the storage device;
determining (906) whether the settop is entitled to access the set of packets by processing at least a portion of the given decryptor including the temporal information, wherein the step of determining whether the settop is entitled further includes the steps of:
receiving from the headend a time-message having a time indicator, a shared-secret identifier for identifying a shared-secret and a first authentication token included therein; and
authenticating the time-message using at least the shared-secret and at least a portion of the time-message;
retrieving from memory the shared secret using the shared secret identifier;
determining whether the time-message is authentic using at least a portion of the time-message and at least a portion of the shared secret; and
responsive to the time-message not being authentic, determining that the settop is not entitled to access the given set of packets, or, responsive to determining the time-message is authentic, using at least the time indicator to determine whether the settop is entitled to access the given set of packets;
responsive to determining the settop is entitled to access the set of packets, further including the steps of:
processing at least a portion of the given decryptor with a first key to generate a decryption-key therefrom;
decrypting (910) content included in the set of packets with the decryption-key; and
providing the user with access to the decrypted content.

2. The method of claim 1, prior to the step of retrieving, further including the steps of:
receiving packets carrying the digital service and a plurality of entitlement control messages; and
storing the packets carrying the digital service and multiple decryptors.

3. The method of claim 2, wherein the digital service and the entitlement control messages are received through a communication link extending between a headend of the digital subscriber system and the settop disposed at a remote location.

4. The method of claim 2, wherein each entitlement control message includes a shared-secret identifier and decryption-key-material, and prior to the step of storing, further including the steps of:
retrieving a shared-secret using the shared-secret identifier, wherein the shared-secret is a second key shared by both the headend and the settop;
determining whether the settop is entitled to access the digital service by processing at least a portion of a given entitlement control message of the plurality of received entitlement control messages; and
responsive to determining the settop is entitled to access the digital service, further including the steps of:
generating the decryption-key by processing the decryption-key-material of the given entitlement control message with the retrieved shared- secret; and
encrypting the decryption-key with the first key to generate an encrypted decryption-key, wherein the encrypted decryption-key is included in the decryptor.

5. The method of claim 4, wherein the step of processing at least a portion of the decryptor with the first key includes the step of:
decrypting the encrypted decryption-key with the first key thereby generating the decryption-key.

6. The method of claim 4, wherein the act of processing the decryption-key- material with the shared-secret includes the act of encrypting the decryption-key-material.

7. The method of claim 4, wherein the act of processing the decryption-key- material with the shared-secret includes the act of decrypting the decryption-key-material.

8. The method of claim 4, wherein the step of determining whether the settop is entitled to access the digital service further includes the step of:
authenticating the given entitlement control message using at least a portion of the shared-secret and at least a portion of the entitlement control message.

9. The method of claim 8, wherein the step of authentication further includes the steps of:
generating the first authentication token by processing at least a portion of the content of the given entitlement control message with the shared-secret, wherein the content of the given entitlement control message includes a second authentication token; and
determining whether the first authentication token and the second authentication token are the same, wherein responsive to the first and second authentication token being the same, the given entitlement control message is authentic.

10. The method of claim 4, and wherein the given entitlement control message further includes a service-identifier associated with the digital service, and further including the steps of:
receiving at the settop a management message having an entitlement setting of the settop for the digital service included therein, wherein the entitlement setting indicates whether the settop is entitled to access or is not entitled to access the digital service; and
storing the entitlement setting of the settop for the digital service in a memory; and
wherein the step of determining whether the settop is entitled to access the digital service further includes the step of:
using the service-identifier of the given entitlement control message to check the entitlement setting.

11. The method of claim 1, wherein the given decryptor further includes a first key-identifier for identifying the first key, an authentication token and a service-identifier, as well as the temporal information associated with the digital service.

12. The method of claim 11, wherein the given decryptor is an entitlement control message, which was received from the headend and stored in the storage device.

13. The method of claim 11, wherein the given decryptor was generated at the settop and stored in the storage device.

14. The method of claim 11, wherein the temporal information includes a broadcast time indicator associated with when the digital service was broadcast from the headend.

15. The method of claim 1, wherein the step of authenticating the time-message further includes the steps of:
generating a second authentication token by processing at least a portion of the content of the time-message with the shared-secret; and
determining whether the first authentication token and the second authentication token are the same, wherein responsive to the first and second authentication token being the same, the time-message is authentic.

16. The method of claim 15, further including the step of:
determining whether a time indicator included in the time-message is within an entitled time-span defined by the temporal information included in the decryptor; and
determining whether an entitlement setting associated with the decryptor is set to entitled, wherein the settop is entitled to access the digital service responsive to both the time-message being authentic, the time being within the defined time-span and the entitlement setting being set to entitled.

17. The method of claim 1, wherein the step of determining whether the settop is entitled further includes the step of:
authenticating the given decryptor using at least the first key and at least a portion of the given decryptor.

18. The method of claim 17, wherein the step of authenticating the given decryptor further includes the steps of:
generating a second authentication token by processing at least a portion of the content of the given decryptor with the first key; and
determining whether the first authentication token and the second authentication token are the same, wherein responsive to the first and second authentication token being the same, the given decryptor is authentic.

19. The method of claim 18, further including the step of:
determining whether an entitlement setting associated with the given decryptor is set to entitled, wherein the settop is entitled to access the digital service responsive to both the given decryptor being authentic and the entitlement setting being set to entitled.

20. The method of claim 17, wherein the given decryptor is an entitlement control message that was received from the headend and stored in the storage device.

21. The method of claim 20, wherein the first key is a shared secret key that is shared by both the headend and the settop.

22. The method of claim 17, wherein the given decryptor is generated at the settop.

23. The method of claim 1, further including the steps of:
retrieving a PVR-Rights ECM from the storage device, wherein the PVR-Rights ECM includes a service-right identifier; and
authenticating the PVR-Rights ECM, wherein responsive to the PVR-Rights ECM not being authentic, at least one selected function of the settop cannot be performed.

24. The method of claim 23, wherein responsive to the PVR-Rights ECM being authentic, further including the steps of:
determining a service-right setting identified by the service-right identifier is set to entitled or not entitled, wherein the service-right setting is associated with a given function of the settop, and responsive to the service-right setting being set to not entitled, the settop cannot perform the given function.

25. The method of claim 24, wherein the given function is a digital service duplication function, and responsive to the setting being set to entitled, the settop duplicates the digital service.

26. The method of claim 25, wherein the duplicate digital service is stored in an external device, and the external device is adapted to provide the digital service independent of the settop.

27. The method of claim 24, further including the steps of:
responsive to determining the service-right setting identified by the service-right identifier is set to not entitled;
transmitting a first message to the headend;
receiving a second message from the headend;
authenticating the second message, wherein responsive to the second message being authentic, the settop can perform the given function.

28. The method of claim 23, further including the steps of:
receiving a PVR-rights management message having at least one PVR service right setting included therein;
determining whether the PVR-rights management message is authentic; and
responsive to the PVR-rights management message being authentic, storing the PVR service rights in a memory.

29. The method of claim 28, wherein the PVR-Rights management message includes a public-key identifier, a first authentication token, and encrypted content, and the step of determining whether the PVR-Rights management message is authentic further includes the steps of:
decrypting the encrypted content of the PVR-Rights management message with a private key of a private key-public key pair belonging to the settop;
decoding the first authentication token with a public key associated with the public-key identifier;
generating a second authentication token at least a portion of the decrypted content of the PVR-Rights management message; and
comparing the decoded first authentication token with the second authentication token, wherein the PVR-Rights management message is authentic if the decoded first authentication token and the second authentication token are the same.

30. The method of claim 1, wherein the step of determining whether the settop is entitled further includes the steps of:
transmitting a message to the headend, the message including a challenge;
receiving a message from the headend, the message including the challenge, a time indicator, and an authentication token; and
authenticating the message, wherein the settop is entitled to access the digital service only if the message is authentic.

31. The method of claim 30, wherein the step of authenticating the message further includes the steps of:
generating a second authentication token by processing at least a portion of the content of the message with a shared-secret; and
determining whether the first authentication token and the second authentication token are the same, wherein responsive to the first and second authentication token being the same, the message is authentic.

32. The method of claim 31, wherein the step of determining whether the settop is entitled further includes the steps of:
receiving from the headend a time-message having a second time indicator, a shared-secret identifier for identifying a shared-secret and a authentication token included therein; and
authenticating the time-message using at least the shared-secret and at least a portion of the time-message; and
comparing the first time indicator to the second time indicator, wherein the settop is only entitled if both the first message and the time-message are authentic and if the second time indicator is not earlier than the first time indicator.

33. The method of claim 1, wherein the storage device has a plurality of decryptors stored therein, each decryptor is associated with a set of packets of the multiple packets carrying the digital service and includes decryption-key-material for generating a decryption-key to decrypt content included in the associated set of packets, the decryption-key-material of a first decryptor of the plurality of decryptors is different from the decryption-key-material of a second decryptor of the plurality of decryptors, and the decryption-key generated from the first decryptor is different from the decryption-key of the second decryptor.

34. A Personal Service Recorder, PSR, for providing a user with a recorded digital service, the PSR in communication with a digital subscriber system having a headend that provides the digital service, the PSR comprising:
a storage device (232) adapted to store a digital service (234) carried in a plurality of packets and a plurality of decryptors (236), each decryptor (236) associated with a set of packets of the plurality of packets, wherein each set of packets make up a portion of the digital service, wherein each decryptor (236) includes at least temporal information defining a time-span during which the PSR is entitled to access the digital service (234) from the storage device;
an entitlement-verifier module (710) in communication with the storage device (232) adapted to receive from the storage device (232) a given decryptor (236) of the plurality of decryptors (236) and determine whether the PSR is entitled to access a given set of packets by at least processing at least a portion of the given decryptor (236) including the temporal information;
a key-generation module (710) in communication with the entitlement-verifier module (710), the key-generation module (710) adapted to generate a decryption-key using a first key (714) and at least a portion of the given decryptor (236), wherein the key-generation module (710) only generates the decryption-key responsive to entitlement-verifier module (710) determining the PSR is entitled to access the given set of packets;
a memory in communication with the key-generation module (710) and the entitlement-verifier module (710), the memory having the first key (714) included therein and entitlement setting (712) included therein, wherein the entitlement-verifier module (710) uses at least a portion of the entitlement setting (212) to determine whether the PSR is entitled to access the given set of packets;
an authenticator module in communication with the storage device (232) and the entitlement-verifier module (710), the authenticator module adapted to receive the given decryptor and determine whether the decryptor is authentic using at least a portion of the decryptor and the first key;
wherein the PSR receives a time-message from the headend, the time-message including a time indicator, a shared secret identifier, and a first authentication token, wherein the memory includes a shared secret associated with the shared secret identifier, the authenticator module retrieves the shared secret from the memory using the shared secret identifier and determines whether the time-message is authentic using at least a portion of the time-message and at least a portion of the shared secret, and responsive to the time-message not being authentic, the entitlement-verifier module determines that the PSR is not entitled to access the given set of packets.

35. The PSR of claim 34, wherein the decryption-key generated by the key- generator using at least a portion of the given decryptor is different from a second decryption-key generated by the key-generator using at least a portion of a second given decryptor.

36. The PSR of claim 34, further including:
a decryption module in communication with the key-generation module and the storage device, the decryption module adapted to receive the decryption- key and the given set of packets, each packet of the set of packets carrying encrypted content, and decrypt the encrypted content included in the given set of packets using the decryption key.

37. The PSR of claim 34, wherein responsive to the authenticator module determining that the decryptor is not authentic, the entitlement-verifier determines that the PSR is not entitled to access the given set of packets.

38. The PSR of claim 34, wherein the decryptor includes a first authentication token, and the authenticator module is adapted to generate a second authentication token from at least a portion of the decryptor and at least a portion of the first key and compare the first and second authentication tokens, wherein responsive to the first and second authentication tokens being the same, the authenticator module determines the decryptor is authentic.

39. The PSR of claim 34, wherein the memory includes a private key of a private key-public key pair belonging to the PSR, and the entitlement-verifier module, the key-generator module, the authenticator module, and the memory are included in a secure element, and the private key is not accessible to modules outside of the secure element.

40. The PSR of claim 34, wherein responsive to the authenticator determining the time-message is authentic, the entitlement-verifier uses at least the time indicator to determine whether the PSR is entitled to access the given set of packets.

41. The PSR of claim 40, wherein the PSR is entitled to access the set of packets responsive to the time indicator being within the defined time span.

42. The PSR of claim 34, further including:
a decryptor-generator module in communication with the memory adapted to receive an particular Entitlement Control Message having a service identifier, a shared-secret identifier, key-decryption-material, and an authentication token include therein and generate therefrom a particular decryptor using at least the Entitlement Control Message and the first key.

43. The PSR of claim 42, wherein the authenticator is adapted to receive the Entitlement Control Message and determine whether the Entitlement Control Message is authentic, and the decryptor-generator module is adapted to generate a decryptor only if the authenticator module has determined the Entitlement Control Message is authentic.

44. The PSR of claim 43, wherein the memory includes a shared secret that is shared by PSR and the headend, wherein the authenticator generates a second authentication token using at least a portion of the Entitlement Control Message and the shared secret and compares the second authentication token with the authentication token of the Entitlement Control Message and determines the Entitlement Control Message is authentic responsive to the two authentication tokens being the same.

45. The PSR of claim 43, wherein the memory includes a shared secret that is shared by PSR and the headend, wherein the decryptor-generator module is adapted to process the key-decryption-material of the Entitlement Control Message with the shared secret to generate a particular decryption-key, wherein the decryptor-generator module encrypts the particular decryption-key with the first key and includes the encrypted decryption-key in a particular decryptor.

46. The PSR of claim 45, wherein decryptor-generator module is adapted to include temporal information and an authentication token in the particular decryptor.

47. The PSR of claim 45, wherein responsive to the authenticator module determining that the Entitlement Control Message is authentic, the entitlement-verifier module determines whether the PSR is entitled to access packets of the digital service, and responsive to the entitlement-verifier determining the PSR is entitled to access packets of the digital service, the decryptor-generator module generates the decryption- key by encrypting the decryption-key-material with the shared secret.

48. The PSR of claim 34, further including: a challenge module in communication with the key-generation module, the challenge module adapted to generate a challenge and include the challenge in a message.

49. The PSR of claim 48, wherein the challenge module is further adapted to receive a reply challenge message and authenticate the reply challenge message using the generated challenge.

## Patentansprüche

1. Verfahren zum Zugreifen auf eine Aufzeichnung eines digitalen Dienstes in einer Set-Top-Einrichtung, wobei die Set-Top-Einrichtung mit einem digitalen Teilnehmersystem, das eine Kopfstelle aufweist, in Kommunikation steht, wobei das Verfahren die folgenden Schritte umfasst:
Auslesen (904) eines gegebenen Entschlüsselers und einer Menge von Paketen aus einer Speichervorrichtung, wobei die Menge von Paketen einen Teil eines digitalen Dienstes übermittelt, wobei in der Speichervorrichtung mehrere Mengen von Paketen und mehrere Entschlüsseler gespeichert sind, wobei jedem Entschlüsseler eine bestimmte Menge von Paketen zugeordnet sind, und wobei die mehreren Mengen von Paketen den digitalen Dienst bilden, wobei jeder Entschlüsseler mindestens zeitliche Informationen enthält, die eine Zeitspanne definieren, während der die Set-Top-Einrichtung berechtigt ist, von der Speichervorrichtung auf den digitalen Dienst zuzugreifen;
Bestimmen (906), ob die Set-Top-Einrichtung berechtigt ist, auf die Menge von Paketen zuzugreifen, durch Verarbeiten mindestens eines Teils des gegebenen Entschlüsselers, der die zeitlichen Informationen enthält, wobei der Schritt des Bestimmens, ob die Set-Top-Einrichtung berechtigt ist, ferner die folgenden Schritte enthält:
Empfangen einer Zeitnachricht, in der ein Zeitindikator, ein Identifizierer eines gemeinsam genutzten Geheimcodes zum Identifizieren eines gemeinsam genutzten Geheimcodes und ein erstes Authentifizierungstoken enthalten sind, von der Kopfstelle; und Authentifizieren der Zeitnachricht unter Verwendung mindestens des gemeinsam genutzten Geheimcodes und mindestens eines Teils der Zeitnachricht;
Auslesen des gemeinsam genutzten Geheimcodes unter Verwendung des Identifizierers eines gemeinsam genutzten Geheimcodes aus dem Speicher;
Bestimmen, ob die Zeitnachricht authentisch ist, unter Verwendung mindestens eines Teils der Zeitnachricht und mindestens eines Teils des gemeinsam genutzten Geheimcodes; und
Bestimmen, dass die Set-Top-Einrichtung nicht berechtigt ist, auf die gegebene Menge von Paketen zuzugreifen, als Reaktion darauf, dass die Zeitnachricht nicht authentisch ist, oder Verwenden mindestens des Zeitindikators, um zu bestimmen, ob die Set-Top-Einrichtung berechtigt ist, auf die gegebene Menge von Paketen zuzugreifen, als Reaktion auf die Bestimmung, dass die Zeitnachricht authentisch ist;
wobei er als Reaktion auf die Bestimmung, dass die Set-Top-Einrichtung berechtigt ist, auf die Menge von Paketen zuzugreifen, ferner die folgenden Schritte enthält:
Verarbeiten mindestens eines Teils des gegebenen Entschlüsselers mit einem ersten Schlüssel, um daraus einen Entschlüsselungsschlüssel zu erzeugen;
Entschlüsseln (910) von Inhalt, der in der Menge von Paketen enthalten ist, mit dem Entschlüsselungsschlüssel; und
Bereitstellen von Zugriff auf den entschlüsselten Inhalt für den Nutzer.

2. Verfahren nach Anspruch 1, das vor dem Schritt des Auslesens ferner die folgenden Schritte enthält:
Auslesen von Paketen, die den digitalen Dienst und mehrere Berechtigungssteuernachrichten übermitteln; und
Speichern der Pakete, die den digitalen Dienst übermitteln, und mehrerer Entschlüsseler.

3. Verfahren nach Anspruch 2, wobei der digitale Dienst und die Berechtigungssteuernachrichten über eine Kommunikationsübertragungsstrecke empfangen werden, die zwischen einer Kopfstelle des digitalen Teilnehmersystems und der an einem fernen Ort angeordneten Set-Top-Einrichtung verläuft.

4. Verfahren nach Anspruch 2, wobei jede Berechtigungssteuernachricht einen Identifizierer eines gemeinsam genutzten Geheimcodes und Entschlüsselungsschlüsselmaterial enthält, und wobei das Verfahren vor dem Schritt des Speicherns ferner die folgenden Schritte enthält:
Auslesen eines gemeinsam genutzten Geheimcodes unter Verwendung des Identifizierers eines gemeinsam genutzten Geheimcodes, wobei der gemeinsam genutzte Geheimcode ein zweiter Schlüssel ist, der sowohl durch die Kopfstelle als auch durch die Set-Top-Einrichtung gemeinsam genutzt wird;
Bestimmen, ob die Set-Top-Einrichtung berechtigt ist, auf den digitalen Dienst zuzugreifen, durch Verarbeiten mindestens eines Teils einer gegebenen Berechtigungssteuernachricht der mehrerer empfangenen Berechtigungssteuernachrichten; und
wobei das Verfahren ferner als Reaktion auf die Bestimmung, dass die Set-Top-Einrichtung berechtigt ist, auf den digitalen Dienst zuzugreifen, die folgenden Schritte enthält:
Erzeugen des Entschlüsselungsschlüssels durch Verarbeiten des Entschlüsselungsschlüsselmaterials der gegebenen Berechtigungssteuernachricht mit dem ausgelesenen gemeinsam genutzten Geheimcode; und
Verschlüsseln des Entschlüsselungsschlüssels mit dem ersten Schlüssel, um einen verschlüsselten Entschlüsselungsschlüssel zu erzeugen, wobei der verschlüsselte Entschlüsselungsschlüssel in dem Entschlüsseler enthalten ist.

5. Verfahren nach Anspruch 4, wobei der Schritt des Verarbeitens mindestens eines Teils des Entschlüsselers mit dem ersten Schlüssel den folgenden Schritt enthält:
Entschlüsseln des verschlüsselten Entschlüsselungsschlüssels mit dem ersten Schlüssel und dadurch Erzeugen des Entschlüsselungsschlüssels.

6. Verfahren nach Anspruch 4, wobei die Handlung des Verarbeitens des Entschlüsselungsschlüsselmaterials mit dem gemeinsam genutzten Geheimcode die Handlung des Verschlüsselns des Entschlüsselungsschlüsselmaterials enthält.

7. Verfahren nach Anspruch 4, wobei die Handlung des Verarbeitens des Entschlüsselungsschlüsselmaterials mit dem gemeinsam genutzten Geheimcode die Handlung des Entschlüsselns des Entschlüsselungsschlüsselmaterials enthält.

8. Verfahren nach Anspruch 4, wobei der Schritt des Bestimmens, ob die Set-Top-Einrichtung berechtigt ist, auf den digitalen Dienst zuzugreifen, ferner den folgenden Schritt enthält:
Authentifizieren der gegebenen Berechtigungssteuernachricht unter Verwendung mindestens eines Teils des gemeinsam genutzten Geheimcodes und mindestens eines Teils der Berechtigungssteuernachricht.

9. Verfahren nach Anspruch 8, wobei der Schritt der Authentifizierung ferner die folgenden Schritte enthält:
Erzeugen des ersten Authentifizierungstokens durch Verarbeiten mindestens eines Teils des Inhalts der gegebenen Berechtigungssteuernachricht mit dem gemeinsam genutzten Geheimcode, wobei der Inhalt der gegebenen Berechtigungssteuernachricht ein zweites Authentifizierungstoken enthält; und
Bestimmen, ob das erste Authentifizierungstoken und das zweite Authentifizierungstoken dieselben sind, wobei die gegebene Berechtigungssteuernachricht als Reaktion darauf, dass das erste und das zweite Authentifizierungstoken dieselben sind, authentisch ist.

10. Verfahren nach Anspruch 4, und wobei die gegebene Berechtigungssteuernachricht ferner einen Dienstidentifizierer enthält, der dem digitalen Dienst zugeordnet ist, und wobei das Verfahren ferner die folgenden Schritte enthält:
Empfangen einer Managementnachricht, in der eine Berechtigungseinstellung der Set-Top-Einrichtung für den digitalen Dienst enthalten ist, bei der Set-Top-Einrichtung, wobei die Berechtigungseinstellung angibt, ob die Set-Top-Einrichtung berechtigt ist, auf den digitalen Dienst zuzugreifen; und
Speichern der Berechtigungseinstellung der Set-Top-Einrichtung für den digitalen Dienst in einem Speicher; und
wobei der Schritt des Bestimmens, ob die Set-Top-Einrichtung berechtigt ist, auf den digitalen Dienst zuzugreifen, ferner den folgenden Schritt enthält:
Verwenden des Dienstidentifizierers der gegebenen Berechtigungssteuernachricht, um die Berechtigungseinstellung zu prüfen.

11. Verfahren nach Anspruch 1, wobei der gegebene Entschlüsseler ferner einen ersten Schlüsselidentifizierer zum Identifizieren des ersten Schlüssels, ein Authentifizierungstoken und einen Dienstidentifizierer sowie die zeitlichen Informationen, die dem digitalen Dienst zugeordnet sind, enthält.

12. Verfahren nach Anspruch 11, wobei der gegebene Entschlüsseler eine Berechtigungssteuernachricht ist, die von der Kopfstelle empfangen und in der Speichervorrichtung gespeichert wurde.

13. Verfahren nach Anspruch 11, wobei der gegebene Entschlüsseler bei der Set-Top-Einrichtung erzeugt und bei der Speichervorrichtung gespeichert wurde.

14. Verfahren nach Anspruch 11, wobei die zeitlichen Informationen einen Sendezeitindikator enthalten, dem zugeordnet ist, wann der digitale Dienst von der Kopfstelle gesendet wurde.

15. Verfahren nach Anspruch 1, wobei der Schritt des Authentifizierens der Zeitnachricht ferner die folgenden Schritte enthält:
Erzeugen eines zweiten Authentifizierungstokens durch Verarbeiten mindestens eines Teils des Inhalts der Zeitnachricht mit dem gemeinsam genutzten Geheimcode; und
Bestimmen, ob das erste Authentifizierungstoken und das zweite Authentifizierungstoken dieselben sind, wobei die Zeitnachricht als Reaktion darauf, dass das erste und das zweite Authentifizierungstoken dieselben sind, authentisch ist.

16. Verfahren nach Anspruch 15, das ferner den folgenden Schritt enthält:
Bestimmen, ob ein in der Zeitnachricht enthaltener Zeitindikator innerhalb einer berechtigten Zeitspanne liegt, die durch die in dem Entschlüsseler enthaltenen zeitlichen Informationen definiert ist; und
Bestimmen, ob eine dem Entschlüsseler zugeordnete Berechtigungseinstellung auf berechtigt eingestellt ist, wobei die Set-Top-Einrichtung als Reaktion darauf, dass sowohl die Zeitnachricht authentisch ist und die Zeit innerhalb der definierten Zeitspanne liegt als auch die Berechtigungseinstellung auf berechtigt eingestellt ist, berechtigt ist, auf den digitalen Dienst zuzugreifen.

17. Verfahren nach Anspruch 1, wobei der Schritt des Bestimmens, ob die Set-Top-Einrichtung berechtigt ist, ferner den folgenden Schritt enthält:
Authentifizieren des gegebenen Entschlüsselers unter Verwendung mindestens des ersten Schlüssels und mindestens eines Teils des gegebenen Entschlüsselers.

18. Verfahren nach Anspruch 17, wobei der Schritt des Authentifizierens des gegebenen Entschlüsselers ferner die folgenden Schritte enthält:
Erzeugen eines zweiten Authentifizierungstokens durch Verarbeiten mindestens eines Teils des Inhalts des gegebenen Entschlüsselers mit dem ersten Schlüssel; und
Bestimmen, ob das erste Authentifizierungstoken und das zweite Authentifizierungstoken dieselben sind, wobei der gegebene Entschlüsseler als Reaktion darauf, dass das erste und das zweite Authentifizierungstoken dieselben sind, authentisch ist.

19. Verfahren nach Anspruch 18, das ferner den folgenden Schritt enthält:
Bestimmen, ob eine dem gegebenen Entschlüsseler zugeordnete Berechtigungseinstellung auf berechtigt eingestellt ist, wobei die Set-Top-Einrichtung als Reaktion darauf, dass sowohl der gegebene Entschlüsseler authentisch ist als auch die Berechtigungseinstellung auf berechtigt eingestellt ist, berechtigt ist, auf den digitalen Dienst zuzugreifen.

20. Verfahren nach Anspruch 17, wobei der gegebene Entschlüsseler eine Berechtigungssteuernachricht ist, die von der Kopfstelle empfangen und in der Speichervorrichtung gespeichert wurde.

21. Verfahren nach Anspruch 20, wobei der erste Schlüssel ein gemeinsam genutzter Geheimcodeschlüssel ist, der sowohl durch die Kopfstelle als auch durch die Set-Top-Einrichtung gemeinsam genutzt wird.

22. Verfahren nach Anspruch 17, wobei der gegebene Entschlüsseler bei der Set-Top-Einrichtung erzeugt wird.

23. Verfahren nach Anspruch 1, das ferner die folgenden Schritte enthält:
Auslesen einer PVR-Rechte-ECM von der Speichervorrichtung, wobei die PVR-Rechte-ECM einen Dienstrechtidentifizierer enthält; und
Authentifizieren der PVR-Rechte-ECM, wobei als Reaktion darauf, dass die PVR-Rechte-ECM nicht authentisch ist, mindestens eine ausgewählte Funktion der Set-Top-Einrichtung nicht ausgeführt werden kann.

24. Verfahren nach Anspruch 23, wobei das Verfahren als Reaktion darauf, dass die PVR-Rechte-ECM authentisch ist, ferner die folgenden Schritte enthält:
Bestimmen, ob eine durch den Dienstrechtidentifizierer identifizierte Dienstrechteinstellung auf berechtigt oder nicht berechtigt eingestellt ist, wobei der Dienstrechteinstellung eine gegebene Funktion der Set-Top-Einrichtung zugeordnet ist, und wobei die Set-Top-Einrichtung als Reaktion darauf, dass die Dienstrechteinstellung auf nicht berechtigt eingestellt ist, die gegebene Funktion nicht ausführen kann.

25. Verfahren nach Anspruch 24, wobei die gegebene Funktion eine Duplizierungsfunktion für digitale Dienste ist, und wobei die Set-Top-Einrichtung als Reaktion darauf, dass die Einstellung auf berechtigt eingestellt ist, den digitalen Dienst dupliziert.

26. Verfahren nach Anspruch 25, wobei der digitale Duplikatdienst in einer externen Vorrichtung gespeichert wird und wobei die externe Vorrichtung dafür ausgelegt ist, den digitalen Dienst unabhängig von der Set-Top-Einrichtung bereitzustellen.

27. Verfahren nach Anspruch 24, das ferner die folgenden Schritte enthält:
als Reaktion auf die Bestimmung, dass die durch den Dienstrechtidentifizierer identifizierte Dienstrechteinstellung auf nicht berechtigt eingestellt ist:
Senden einer ersten Nachricht an die Kopfstelle;
Empfangen einer zweiten Nachricht von der Kopfstelle;
Authentifizieren der zweiten Nachricht, wobei die Set-Top-Einrichtung als Reaktion darauf, dass die zweite Nachricht authentisch ist, die gegebene Funktion ausführen kann.

28. Verfahren nach Anspruch 23, das ferner die folgenden Schritte enthält:
Empfangen einer PVR-Rechte-Managementnachricht, in der mindestens eine PVR-Dienstrechteinstellung enthalten ist;
Bestimmen, ob die PVR-Rechte-Managementnachricht authentisch ist; und
Speichern der PVR-Dienstrechte in einem Speicher als Reaktion darauf, dass die PVR-Rechte-Managementnachricht authentisch ist.

29. Verfahren nach Anspruch 28, wobei die PVR-Rechte-Managementnachricht einen Identifizierer eines öffentlichen Schlüssels, ein erstes Authentifizierungstoken und verschlüsselten Inhalt enthält, und wobei der Schritt des Bestimmens, ob die PVR-Rechte-Managementnachricht authentisch ist, ferner die folgenden Schritte enthält:
Entschlüsseln des verschlüsselten Inhalts der PVR-Rechte-Managementnachricht mit einem privaten Schlüssel eines Paars aus privatem Schlüssel und öffentlichem Schlüssel, das zu der Set-Top-Einrichtung gehört;
Decodieren des ersten Authentifizierungstokens mit einem öffentlichen Schlüssel, der dem Identifizierer eines öffentlichen Schlüssels zugeordnet ist;
Erzeugen eines zweiten Authentifizierungstokens mindestens eines Teils des entschlüsselten Inhalts der PVR-Rechte-Managementnachricht; und
Vergleichen des decodierten ersten Authentifizierungstokens mit dem zweiten Authentifizierungstoken, wobei die PVR-Rechte-Managementnachricht authentisch ist, falls das decodierte erste Authentifizierungstoken und das zweite Authentifizierungstoken dieselben sind.

30. Verfahren nach Anspruch 1, wobei der Schritt des Bestimmens, ob die Set-Top-Einrichtung berechtigt ist, ferner die folgenden Schritte enthält:
Senden einer Nachricht an die Kopfstelle, wobei die Nachricht eine Authentifizierungsabfrage enthält;
Empfangen einer Nachricht von der Kopfstelle, wobei die Nachricht die Authentifizierungsabfrage, einen Zeitindikator und ein Authentifizierungstoken enthält; und
Authentifizieren der Nachricht, wobei die Set-Top-Einrichtung nur berechtigt ist, auf den digitalen Dienst zuzugreifen, wenn die Nachricht authentisch ist.

31. Verfahren nach Anspruch 30, wobei der Schritt des Authentifizierens der Nachricht ferner die folgenden Schritte enthält:
Erzeugen eines zweiten Authentifizierungstokens durch Verarbeiten mindestens eines Teils des Inhalts der Nachricht mit einem gemeinsam genutzten Geheimcode; und
Bestimmen, ob das erste Authentifizierungstoken und das zweite Authentifizierungstoken dieselben sind, wobei die Nachricht als Reaktion darauf, dass das erste und das zweite Authentifizierungstoken dieselben sind, authentisch ist.

32. Verfahren nach Anspruch 31, wobei der Schritt des Bestimmens, ob die Set-Top-Einrichtung berechtigt ist, ferner die folgenden Schritte enthält:
Empfangen einer Zeitnachricht, in der ein zweiter Zeitindikator, ein Identifizierer eines gemeinsam genutzten Geheimcodes zum Identifizieren eines gemeinsam genutzten Geheimcodes und ein Authentifizierungstoken enthalten sind, von der Kopfstelle; und
Authentifizieren der Zeitnachricht unter Verwendung mindestens des gemeinsam genutzten Geheimcodes und mindestens eines Teils der Zeitnachricht; und
Vergleichen des ersten Zeitindikators mit dem zweiten Zeitindikator, wobei die Set-Top-Einrichtung nur berechtigt ist, falls sowohl die erste Nachricht als auch die Zeitnachricht authentisch sind und falls der zweite Zeitindikator nicht früher als der erste Zeitindikator ist.

33. Verfahren nach Anspruch 1, wobei in der Speichervorrichtung mehrere Entschlüsseler gespeichert sind, wobei jedem Entschlüsseler eine Menge von Paketen der mehreren Pakete, die den digitalen Dienst übermitteln, zugeordnet sind und wobei er Entschlüsselungsschlüsselmaterial zum Erzeugen eines Entschlüsselungsschlüssels zum Entschlüsseln von Inhalt, der in der zugeordneten Menge von Paketen enthalten ist, enthält, wobei das Entschlüsselungsschlüsselmaterial eines ersten Entschlüsselers der mehreren Entschlüsseler von dem Entschlüsselungsschlüsselmaterial eines zweiten Entschlüsselers der mehreren Entschlüsseler verschieden ist, und wobei der von dem ersten Entschlüsseler erzeugte Entschlüsselungsschlüssel von dem Entschlüsselungsschlüssel des zweiten Entschlüsselers verschieden ist.

34. Personal Service Recorder, PSR, zum Bereitstellen eines aufgezeichneten digitalen Dienstes für einen Nutzer, wobei der PSR mit einem digitalen Teilnehmersystem, das eine Kopfstelle aufweist, die den digitalen Dienst bereitstellt, in Kommunikation steht, wobei der PSR umfasst:
eine Speichervorrichtung (232), die dafür ausgelegt ist, einen digitalen Dienst (234), der in mehreren Paketen übermittelt wird, und mehrere Entschlüsseler (236) zu speichern, wobei jedem Entschlüsseler (236) eine Menge von Paketen der mehreren Pakete zugeordnet sind, wobei jede Menge von Paketen einen Teil des digitalen Dienstes bildet, wobei jeder Entschlüsseler (236) mindestens zeitliche Informationen enthält, die eine Zeitspanne definieren, während der der PSR berechtigt ist, von der Speichervorrichtung auf den digitalen Dienst (234) zuzugreifen;
ein Berechtigungsverifizierermodul (710) in Kommunikation mit der Speichervorrichtung (232), das dafür ausgelegt ist, von der Speichervorrichtung (232) einen gegebenen Entschlüsseler (236) der mehreren Entschlüsseler (236) zu empfangen und mindestens durch Verarbeiten mindestens eines Teils des gegebenen Entschlüsselers (236), der die zeitlichen Informationen enthält, zu bestimmen, ob der PSR berechtigt ist, auf eine gegebene Menge von Paketen zuzugreifen;
ein Schlüsselerzeugungsmodul (710) in Kommunikation mit dem Berechtigungsverifizierermodul (710), wobei das Schlüsselerzeugungsmodul (710) dafür ausgelegt ist, unter Verwendung eines ersten Schlüssels (714) und mindestens eines Teils des gegebenen Entschlüsselers (236) einen Entschlüsselungsschlüssel zu erzeugen, wobei das Schlüsselerzeugungsmodul (710) den Entschlüsselungsschlüssel nur als Reaktion darauf erzeugt, dass das Berechtigungsverifizierermodul (710) bestimmt, dass der PSR berechtigt ist, auf die gegebene Menge von Paketen zuzugreifen;
einen Speicher in Kommunikation mit dem Schlüsselerzeugungsmodul (710) und mit dem Berechtigungsverifizierermodul (710), wobei in dem Speicher der erste Schlüssel (714) enthalten ist und wobei darin eine Berechtigungseinstellung (712) enthalten ist, wobei das Berechtigungsverifizierermodul (710) mindestens einen Teil der Berechtigungseinstellung (212) verwendet, um zu bestimmen, ob der PSR berechtigt ist, auf die gegebene Menge von Paketen zuzugreifen;
ein Authentifizierermodul in Kommunikation mit der Speichervorrichtung (232) und mit dem Berechtigungsverifizierermodul (710), wobei das Authentifizierermodul dafür ausgelegt ist, den gegebenen Entschlüsseler zu empfangen und unter Verwendung mindestens eines Teils des Entschlüsselers und des ersten Schlüssels zu bestimmen, ob der Entschlüsseler authentisch ist;
wobei der PSR von der Kopfstelle eine Zeitnachricht empfängt, wobei die Zeitnachricht einen Zeitindikator, einen Identifizierer eines gemeinsam genutzten Geheimcodes und ein erstes Authentifizierungstoken enthält, wobei der Speicher einen gemeinsam genutzten Geheimcode enthält, dem der Identifizierer eines gemeinsam genutzten Geheimcodes zugeordnet ist, wobei das Authentifizierermodul den gemeinsam genutzten Geheimcode unter Verwendung des Identifizierers eines gemeinsam genutzten Geheimcodes aus dem Speicher ausliest und unter Verwendung mindestens eines Teils der Zeitnachricht und mindestens eines Teils des gemeinsam genutzten Geheimcodes bestimmt, ob die Zeitnachricht authentisch ist, und wobei das Berechtigungsverifizierermodul als Reaktion darauf, dass die Zeitnachricht nicht authentisch ist, bestimmt, dass der PSR nicht berechtigt ist, auf die gegebene Menge von Paketen zuzugreifen.

35. PSR nach Anspruch 34, wobei der Entschlüsselungsschlüssel, der durch den Schlüsselerzeuger unter Verwendung mindestens eines Teils des gegebenen Entschlüsselers erzeugt wird, von einem zweiten Entschlüsselungsschlüssel, der durch den Schlüsselerzeuger unter Verwendung mindestens eines Teils eines zweiten gegebenen Entschlüsselers erzeugt wird, verschieden ist.

36. PSR nach Anspruch 34, der ferner enthält:
ein Entschlüsselungsmodul in Kommunikation mit dem Schlüsselerzeugungsmodul und mit der Speichervorrichtung, wobei das Entschlüsselungsmodul dafür ausgelegt ist, den Entschlüsselungsschlüssel und die gegebene Menge von Paketen, wobei jedes Paket der Menge von Paketen verschlüsselten Inhalt übermittelt, zu empfangen und den in der gegebenen Menge von Paketen enthaltenen verschlüsselten Inhalt unter Verwendung des Entschlüsselungsschlüssels zu entschlüsseln.

37. PSR nach Anspruch 34, wobei der Berechtigungsverifizierer als Reaktion darauf, dass das Authentifizierermodul bestimmt, dass der Entschlüsseler nicht authentisch ist, bestimmt, dass der PSR nicht berechtigt ist, auf die gegebene Menge von Paketen zuzugreifen.

38. PSR nach Anspruch 34, wobei der Entschlüsseler ein erstes Authentifizierungstoken enthält und wobei das Authentifizierermodul dafür ausgelegt ist, aus mindestens einem Teil des Entschlüsselers und mindestens einem Teil des ersten Schlüssels ein zweites Authentifizierungstoken zu erzeugen und das erste und das zweite Authentifizierungstoken zu vergleichen, wobei das Authentifizierermodul als Reaktion darauf, dass das erste und das zweite Authentifizierungstoken dieselben sind, bestimmt, dass der Entschlüsseler authentisch ist.

39. PSR nach Anspruch 34, wobei der Speicher einen privaten Schlüssel eines Paars aus privatem Schlüssel und öffentlichem Schlüssel, das zu dem PSR gehört, enthält, und wobei das Berechtigungsverifizierermodul, das Schlüsselerzeugermodul, das Authentifizierermodul und der Speicher in einem sicheren Element enthalten sind, und wobei Module außerhalb des sicheren Elements nicht auf den privaten Schlüssel zugreifen können.

40. PSR nach Anspruch 34, wobei der Berechtigungsverifizierer als Reaktion darauf, dass der Authentifizierer bestimmt, dass die Zeitnachricht authentisch ist, mindestens den Zeitindikator verwendet, um zu bestimmen, ob der PSR berechtigt ist, auf die gegebene Menge von Paketen zuzugreifen.

41. PSR nach Anspruch 40, wobei der PSR als Reaktion darauf, dass der Indikator innerhalb der definierten Zeitspanne liegt, berechtigt ist, auf die Menge von Paketen zuzugreifen.

42. PSR nach Anspruch 34, der ferner enthält:
ein Entschlüsselererzeugermodul in Kommunikation mit dem Speicher, das dafür ausgelegt ist, eine bestimmte Berechtigungssteuernachricht, in der ein Dienstidentifizierer, ein Identifizierer eines gemeinsam genutzten Geheimcodes, Schlüsselentschlüsselungsmaterial und ein Authentifizierungstoken enthalten sind, zu empfangen und daraus unter Verwendung mindestens der Berechtigungssteuernachricht und des ersten Schlüssels einen bestimmten Entschlüsseler zu erzeugen.

43. PSR nach Anspruch 42, wobei der Authentifizierer dafür ausgelegt ist, die Berechtigungssteuernachricht zu empfangen und zu bestimmen, ob die Berechtigungssteuernachricht authentisch ist, und wobei das Entschlüsselererzeugermodul dafür ausgelegt ist, einen Entschlüsseler nur zu erzeugen, wenn das Authentifizierermodul bestimmt hat, dass die Berechtigungssteuernachricht authentisch ist.

44. PSR nach Anspruch 43, wobei der Speicher einen gemeinsam genutzten Geheimcode enthält, der durch den PSR und durch die Kopfstelle gemeinsam genutzt wird, wobei der Authentifizierer unter Verwendung mindestens eines Teils der Berechtigungssteuernachricht und des gemeinsam genutzten Geheimcodes ein zweites Authentifizierungstoken erzeugt und das zweite Authentifizierungstoken mit dem Authentifizierungstoken der Berechtigungssteuernachricht vergleicht und als Reaktion darauf, dass die zwei Authentifizierungstoken dieselben sind, bestimmt, dass die Berechtigungssteuernachricht authentisch ist.

45. PSR nach Anspruch 43, wobei der Speicher einen gemeinsam genutzten Geheimcode enthält, der durch den PSR und durch die Kopfstelle gemeinsam genutzt wird, wobei das Entschlüsselererzeugermodul dafür ausgelegt ist, das Schlüsselentschlüsselungsmaterial der Berechtigungssteuernachricht mit dem gemeinsam genutzten Geheimcode zu verarbeiten, um einen bestimmten Entschlüsselungsschlüssel zu erzeugen, wobei das Entschlüsselererzeugermodul den bestimmten Entschlüsselungsschlüssel mit dem ersten Schlüssel verschlüsselt und den verschlüsselten Entschlüsselungsschlüssel in einen bestimmten Entschlüsseler aufnimmt.

46. PSR nach Anspruch 45, wobei das Entschlüsselererzeugermodul dafür ausgelegt ist, in den bestimmten Entschlüsseler zeitliche Informationen und ein Authentifizierungstoken aufzunehmen.

47. PSR nach Anspruch 45, wobei das Berechtigungsverifizierermodul als Reaktion darauf, dass das Authentifizierermodul bestimmt, dass die Berechtigungssteuernachricht authentisch ist, bestimmt, ob der PSR berechtigt ist, auf Pakete des digitalen Dienstes zuzugreifen, und das Entschlüsselererzeugermodul als Reaktion darauf, dass der Berechtigungsverifizierer bestimmt, dass der PSR berechtigt ist, auf Pakete des digitalen Dienstes zuzugreifen, durch Verschlüsseln des Entschlüsselungsschlüsselmaterials mit dem gemeinsam genutzten Geheimcode den Entschlüsselungsschlüssel erzeugt.

48. PSR nach Anspruch 34, der ferner enthält: ein Authentifizierungsabfragemodul in Kommunikation mit dem Schlüsselerzeugungsmodul, wobei das Authentifizierungsabfragemodul dafür ausgelegt ist, eine Authentifizierungsabfrage zu erzeugen und die Authentifizierungsabfrage in eine Nachricht aufzunehmen.

49. PSR nach Anspruch 48, wobei das Authentifizierungsabfragemodul ferner dafür ausgelegt ist, eine Authentifizierungsabfrage-Antwortnachricht zu empfangen und die Authentifizierungsabfrage-Antwortnachricht unter Verwendung der erzeugten Authentifizierungsabfrage zu authentifizieren.

## Revendications

1. Procédé d'accès à un enregistrement d'un service numérique sur un décodeur, le décodeur communiquant avec un système d'abonné numérique équipé d'une tête de réseau, le procédé comprenant les étapes consistant à :
extraire (904) un décrypteur donné et un ensemble de paquets d'un dispositif de stockage, l'ensemble de paquets transportant une partie d'un service numérique, où une pluralité de ensembles de paquets et une pluralité de décrypteurs sont stockés dans le dispositif de stockage, chaque décrypteur est associé à un ensemble spécifique de paquets, et les multiples ensembles de paquets forment le service numérique, où chaque décrypteur inclut au moins des informations temporelles définissant une durée pendant laquelle le décodeur est autorisé à accéder au service numérique à partir du dispositif de stockage ;
déterminer (906) si le décodeur est autorisé à accéder à l'ensemble de paquets en traitant au moins une partie du décrypteur donné incluant les informations temporelles, où l'étape de détermination de l'autorisation du décodeur comprend en outre les étapes consistant à :
recevoir de la tête de réseau un message temporel incluant un indicateur temporel, un identificateur de secret partagé pour l'identification d'un secret partagé et un premier jeton d'authentification ; et
authentifier le message temporel à l'aide d'au moins le secret partagé et d'au moins une partie du message temporel ;
extraire de la mémoire le secret partagé à l'aide de l'identificateur de secret partagé ;
déterminer si le message temporel est authentique à l'aide d'au moins une partie du message temporel et d'au moins une partie du secret partagé ; et
lorsque le message temporel n'est pas authentique, déterminer que le décodeur n'est pas autorisé à accéder à l'ensemble de paquets donné, ou, lorsqu'il est déterminé que le message temporel est authentique, utiliser au moins l'indicateur temporel pour déterminer si le décodeur est autorisé à accéder à l'ensemble de paquets donné ; lorsqu'il est déterminé que le décodeur est autorisé à accéder à l'ensemble de paquets, comprenant en outre les étapes consistant à :
traiter au moins une partie du décrypteur donné avec une première clé pour générer une clé de décryptage ;
décrypter (910) le contenu inclus dans l'ensemble de paquets avec la clé de décryptage ; et
fournir à l'utilisateur un accès au contenu décrypté.

2. Procédé selon la revendication 1, avant l'étape d'extraction, comprenant en outre les étapes suivantes :
réception de paquets transportant le service numérique et une pluralité de messages de contrôle d'autorisation ; et
stockage des paquets transportant le service numérique et une pluralité de décrypteurs.

3. Procédé selon la revendication 2, dans lequel le service numérique et les messages de contrôle d'autorisation sont reçus via un lien de communication s'étendant entre une tête de réseau du système d'abonné numérique et le décodeur installé à un emplacement distant.

4. Procédé selon la revendication 2, dans lequel chaque message de contrôle d'autorisation inclut un identificateur de secret partagé et des informations de clé de décryptage, et avant l'étape de stockage, comprenant en outre les étapes consistant à :
extraire un secret partagé à l'aide de l'identificateur de secret partagé, où le secret partagé est une deuxième clé partagée par la tête de réseau et le décodeur ;
déterminer si le décodeur est autorisé à accéder au service numérique en traitant au moins une partie d'un message de contrôle d'autorisation donné de la pluralité de messages de contrôle d'autorisation reçus ; et
lorsqu'il est déterminé que le décodeur est autorisé à accéder au service numérique, comprenant en outre les étapes consistant à :
générer la clé de décryptage en traitant les informations de clé de décryptage du message de contrôle d'autorisation donné avec le secret partagé extrait ; et
crypter la clé de décryptage avec la première clé pour générer une clé de décryptage cryptée, où la clé de décryptage cryptée est incluse dans le décrypteur.

5. Procédé selon la revendication 4, dans lequel l'étape de traitement d'au moins une partie du décrypteur avec la première clé comprend l'étape consistant à :
décrypter la clé de décryptage cryptée avec la première clé, générant ainsi la clé de décryptage.

6. Procédé selon la revendication 4, dans lequel l'action de traitement des informations de clé de décryptage avec le secret partagé inclut l'action de cryptage des informations de clé de décryptage.

7. Procédé selon la revendication 4, dans lequel l'action de traitement des informations de clé de décryptage avec le secret partagé inclut l'action de décryptage des informations de clé de décryptage.

8. Procédé selon la revendication 4, dans lequel l'étape de détermination de l'autorisation du décodeur à accéder au service numérique comprend en outre l'étape consistant à :
authentifier le message de contrôle d'autorisation à l'aide d'au moins une partie du secret partagé et d'au moins une partie du message de contrôle d'autorisation.

9. Procédé selon la revendication 8, dans lequel l'étape d'authentification comprend en outre les étapes consistant à :
générer le premier jeton d'authentification en traitant au moins une partie du contenu du message de contrôle d'autorisation donné avec le secret partagé, où le contenu du message de contrôle d'autorisation donné inclut un deuxième jeton d'authentification ;
déterminer si le premier jeton d'authentification et le deuxième jeton d'authentification sont identiques, où si les premier et deuxième jetons d'authentification sont identiques, le message de contrôle d'autorisation donné est authentique.

10. Procédé selon la revendication 4, et dans lequel le message de contrôle d'autorisation donné inclut en outre un identificateur de service associé au service numérique, et comprenant en outre les étapes consistant à :
recevoir au niveau du décodeur un message de gestion comprenant un paramètre d'autorisation du décodeur pour le service numérique, où le paramètre d'autorisation indique si le décodeur est autorisé ou non à accéder au service numérique ; et
stocker le paramètre d'autorisation du décodeur pour le service numérique dans une mémoire ; et où l'étape de détermination de l'autorisation du décodeur à accéder au service numérique comprend en outre l'étape consistant à :
utiliser l'identificateur de service du message de contrôle d'autorisation donné pour vérifier le paramètre d'autorisation.

11. Procédé selon la revendication 1, dans lequel le décrypteur donné inclut en outre un premier identificateur de clé pour l'identification de la première clé, un jeton d'authentification et un identificateur de service, ainsi que les informations temporelles associées au service numérique.

12. Procédé selon la revendication 11, dans lequel le décrypteur donné est un message de contrôle d'autorisation, qui a été reçu à partir de la tête de réseau et stocké dans le dispositif de stockage.

13. Procédé selon la revendication 11, dans lequel le décrypteur donné a été généré au niveau du décodeur et stocké dans le dispositif de stockage.

14. Procédé selon la revendication 11, dans lequel les informations temporelles incluent un indicateur temporel de diffusion associé au moment où le service numérique a été diffusé à partir de la tête de réseau.

15. Procédé selon la revendication 1, dans lequel l'étape d'authentification du message temporel comprend en outre les étapes consistant à :
générer un deuxième jeton d'authentification en traitant au moins une partie du contenu du message temporel avec le secret partagé ; et
déterminer si le premier jeton d'authentification et le deuxième jeton d'authentification sont identiques, où si les premier et deuxième jetons d'authentification sont identiques, le message temporel est authentique.

16. Procédé selon la revendication 15, comprenant en outre l'étape consistant à :
déterminer si un indicateur temporel inclus dans le message temporel est compris dans une durée autorisée définie par les informations temporelles incluses dans le décrypteur, et
déterminer si un paramètre d'autorisation associé au décrypteur est défini sur autorisé, où le décodeur est autorisé à accéder au service numérique lorsque le message temporel est authentique, l'heure est comprise dans la durée définie et le paramètre d'autorisation est défini sur autorisé.

17. Procédé selon la revendication 1, dans lequel l'étape de détermination de l'autorisation du décodeur comprend en outre l'étape consistant à :
authentifier le décrypteur donné à l'aide d'au moins la première clé et d'au moins une partie du décrypteur donné.

18. Procédé selon la revendication 17, dans lequel l'étape d'authentification du décrypteur donné comprend en outre les étapes consistant à :
générer un deuxième jeton d'authentification en traitant au moins une partie du contenu du décrypteur donné avec la première clé ; et
déterminer si le premier jeton d'authentification et le deuxième jeton d'authentification sont identiques, où si les premier et deuxième jetons d'authentification sont identiques, le décrypteur donné est authentique.

19. Procédé selon la revendication 18, comprenant en outre l'étape consistant à :
déterminer si un paramètre d'autorisation associé au décrypteur donné est défini sur autorisé, où le décodeur est autorisé à accéder au service numérique lorsque le décrypteur donné est authentique et que le paramètre d'autorisation est défini sur autorisé.

20. Procédé selon la revendication 17, dans lequel le décrypteur donné est un message de contrôle d'autorisation qui a été reçu à partir de la tête de réseau et stocké dans le dispositif de stockage.

21. Procédé selon la revendication 20, dans lequel la première clé est une clé de secret partagé qui est partagée par la tête de réseau et le décodeur.

22. Procédé selon la revendication 17, dans lequel le décrypteur donné est généré au niveau du décodeur.

23. Procédé selon la revendication 1, comprenant en outre les étapes consistant à :
extraire un message de contrôle d'autorisation (ECM) relatif aux droits de l'enregistreur vidéo personnel (PVR) du dispositif de stockage, où l'ECM relatif aux droits du PVR inclut un identificateur de droits de service ; et
authentifier l'ECM relatif aux droits du PVR, où lorsque l'ECM relatif aux droits du PVR n'est pas authentique, au moins une fonction sélectionnée du décodeur ne peut pas être exécutée.

24. Procédé selon la revendication 23, comprenant en outre, lorsque l'ECM relatif aux droits du PVR est authentique, les étapes consistant à :
déterminer si un paramètre de droits de service identifié par l'identificateur de droits de service est défini sur autorisé ou sur non autorisé, où le paramètre de droits de service est associé à une fonction donnée du décodeur, et lorsque le paramètre de droits de service est défini sur non autorisé, le décodeur ne peut pas exécuter la fonction donnée.

25. Procédé selon la revendication 24, dans lequel la fonction donnée est une fonction de duplication de service numérique, et lorsque le paramètre est défini sur autorisé, le décodeur duplique le service numérique.

26. Procédé selon la revendication 25, dans lequel le service numérique dupliqué est stocké dans un dispositif externe, et le dispositif externe est adapté pour fournir le service numérique indépendamment du décodeur.

27. Procédé selon la revendication 24, comprenant en outre les étapes consistant à :
lorsqu'il est déterminé que le paramètre de droits de service identifié par l'identificateur de droits de service est défini sur non autorisé ;
transmettre un premier message à la tête de réseau ; recevoir un deuxième message de la tête de réseau ;
authentifier le deuxième message, où lorsque le deuxième message est authentique, le décodeur peut exécuter la fonction donnée.

28. Procédé selon la revendication 23, comprenant en outre les étapes consistant à :
recevoir un message de gestion relatif aux droits du PVR incluant au moins un paramètre de droits de service du PVR ;
déterminer si le message de gestion relatif aux droits du PVR est authentique ; et lorsque le message de gestion relatif aux droits du PVR est authentique, stocker les droits de service du PVR dans une mémoire.

29. Procédé selon la revendication 28, dans lequel le message de gestion relatif aux droits du PVR inclut un identificateur de clé publique, un premier jeton d'authentification et du contenu crypté, et l'étape de détermination de l'authenticité du message de gestion relatif aux droits du PVR comprend en outre les étapes consistant à :
décrypter le contenu crypté du message de gestion relatif aux droits du PVR avec une clé privée d'une paire clé privée-clé publique appartenant au décodeur ;
décoder le premier jeton d'authentification avec une clé publique associée à l'identificateur de clé publique ;
générer un deuxième jeton d'authentification à l'aide d'au moins une partie du contenu décrypté du message de gestion relatif aux droits du PVR ; et
comparer le premier jeton d'authentification décodé au deuxième jeton d'authentification, où le message de gestion relatif aux droits du PVR est authentique si le premier jeton d'authentification décodé et le deuxième jeton d'authentification sont identiques.

30. Procédé selon la revendication 1, dans lequel l'étape de détermination de l'autorisation du décodeur comprend en outre les étapes consistant à :
transmettre un message à la tête de réseau, le message incluant un challenge ;
recevoir un message de la tête de réseau, le message incluant le challenge, un indicateur temporel et un jeton d'authentification ; et
authentifier le message, où le décodeur est autorisé à accéder au service numérique uniquement si le message est authentique.

31. Procédé selon la revendication 30, dans lequel l'étape d'authentification du message comprend en outre les étapes consistant à :
générer un deuxième jeton d'authentification en traitant au moins une partie du contenu du message avec un secret partagé ; et
déterminer si le premier jeton d'authentification et le deuxième jeton d'authentification sont identiques, où lorsque les premier et deuxième jetons d'authentification sont identiques, le message est authentique.

32. Procédé selon la revendication 31, dans lequel l'étape de détermination de l'autorisation du décodeur comprend en outre les étapes consistant à :
recevoir de la tête de réseau un message temporel incluant un deuxième indicateur temporel, un identificateur de secret partagé pour l'identification d'un secret partagé et un jeton d'authentification ; et
authentifier le message temporel à l'aide d'au moins le secret partagé et d'au moins une partie du message temporel ; et
comparer le premier indicateur temporel au deuxième indicateur temporel, où le décodeur est autorisé uniquement si le premier message et le message temporel sont authentiques et si le deuxième indicateur temporel n'est pas antérieur au premier indicateur temporel.

33. Procédé selon la revendication 1, dans lequel une pluralité de décrypteurs est stockée dans le dispositif de stockage, chaque décrypteur est associé à un ensemble de paquets parmi les multiples paquets transportant le service numérique et inclut des informations de clé de décryptage pour la génération d'une clé de décryptage pour décrypter du contenu inclus dans l'ensemble de paquets associé, les informations de clé de décryptage d'un premier décrypteur de la pluralité de décrypteurs sont différentes des informations de clé de décryptage d'un deuxième décrypteur de la pluralité de décrypteurs, et la clé de décryptage générée à partir du premier décrypteur est différente de la clé de décryptage du deuxième décrypteur.

34. Enregistreur vidéo personnel, PSR, pour fournir à un utilisateur un service numérique enregistré, le PSR communiquant avec un système d'abonné numérique comportant une tête de réseau qui fournit le service numérique, le PSR comprenant :
un dispositif de stockage (232) adapté pour stocker un service numérique (234) transporté dans une pluralité de paquets et une pluralité de décrypteurs (236), chaque décrypteur (236) étant associé à un ensemble de paquets de la pluralité de paquets, où chaque ensemble de paquets fait partie du service numérique, où chaque décrypteur (236) inclut au moins des informations temporelles définissant une durée pendant laquelle le PSR est autorisé à accéder au service numérique (234) à partir du dispositif de stockage ;
un module vérificateur d'autorisation (710) qui communique avec le dispositif de stockage (232) adapté pour recevoir du dispositif de stockage (232) un décrypteur donné (236) de la pluralité de décrypteurs (236) et déterminer si le PSR est autorisé à accéder à un ensemble de paquets donné en traitant au moins une partie du décrypteur donné (236) incluant les informations temporelles ;
un module de génération de clé (710) qui communique avec le module vérificateur d'autorisation (710), le module de génération de clé (710) étant adapté pour générer une clé de décryptage à l'aide d'une première clé (714) et d'au moins une partie du décrypteur donné (236), où le module de génération de clé (710) génère la clé de décryptage uniquement lorsque le module vérificateur d'autorisation (710) détermine que le PSR est autorisé à accéder à l'ensemble de paquets donné ;
une mémoire qui communique avec le module de génération de clé (710) et le module vérificateur d'autorisation (710), la mémoire incluant la première clé (714) et le paramètre d'autorisation (712), où le module vérificateur d'autorisation (710) utilise au moins une partie du paramètre d'autorisation (212) pour déterminer si le PSR est autorisé à accéder à l'ensemble de paquets donné ;
un module authentificateur qui communique avec le dispositif de stockage (232) et le module vérificateur d'autorisation (710), le module authentificateur étant adapté pour recevoir le décrypteur donné et déterminer si le décrypteur est authentique à l'aide d'au moins une partie du décrypteur et de la première clé ;
dans lequel le PSR reçoit un message temporel de la tête de réseau, le message temporel incluant un indicateur temporel, un identificateur de secret partagé et un premier jeton d'authentification, où la mémoire inclut un secret partagé associé à l'identificateur de secret partagé, le module authentificateur extrait le secret partagé de la mémoire à l'aide de l'identificateur de secret partagé et détermine si le message temporel est authentique à l'aide d'au moins une partie du message temporel et d'au moins une partie du secret partagé, et lorsque le message temporel n'est pas authentique, le module vérificateur d'autorisation détermine que le PSR n'est pas autorisé à accéder à l'ensemble de paquets donné.

35. PSR selon la revendication 34, dans lequel la clé de décryptage générée par le générateur de clé à l'aide d'au moins une partie du décrypteur donné est différente d'une deuxième clé de décryptage générée par le générateur de clé à l'aide d'au moins une partie d'un deuxième décrypteur donné.

36. PSR selon la revendication 34, incluant en outre :
un module de décryptage qui communique avec le module de génération de clé et le dispositif de stockage, le module de décryptage étant adapté pour recevoir la clé de décryptage et l'ensemble de paquets donné, chaque paquet de l'ensemble de paquets transportant du contenu crypté, et décrypter le contenu crypté inclus dans l'ensemble de paquets donné à l'aide de la clé de décryptage.

37. PSR selon la revendication 34, dans lequel lorsque le module authentificateur détermine que le décrypteur n'est pas authentique, le vérificateur d'autorisation détermine que le PSR n'est pas autorisé à accéder à l'ensemble de paquets donné.

38. PSR selon la revendication 34, dans lequel le décrypteur inclut un premier jeton d'identification, et le module authentificateur est adapté pour générer un deuxième jeton d'identification à partir d'au moins une partie du décrypteur et d'au moins une partie de la première clé et comparer les premier et deuxième jetons d'authentification, où lorsque les premier et deuxième jetons d'authentification sont identiques, le module authentificateur détermine que le décrypteur est authentique.

39. PSR selon la revendication 34, dans lequel la mémoire inclut une clé privée d'une paire clé privée-clé publique appartenant au PSR, et le module vérificateur d'autorisation, le module générateur de clé, le module authentificateur et la mémoire sont inclus dans un élément sécurisé, et la clé privée n'est pas accessible aux modules à l'extérieur de l'élément sécurisé.

40. PSR selon la revendication 34, dans lequel lorsque l'authentificateur détermine que le message temporel est authentique, le vérificateur d'autorisation utilise au moins l'indicateur temporel pour déterminer si le PSR est autorisé à accéder à l'ensemble de paquets donné.

41. PSR selon la revendication 40, dans lequel le PSR est autorisé à accéder à l'ensemble de paquets lorsque l'indicateur temporel est compris dans la durée définie.

42. PSR selon la revendication 34, incluant en outre :
un module décrypteur-générateur qui communique avec la mémoire adapté pour recevoir un message de contrôle d'autorisation spécifique incluant un identificateur de service, un identificateur de secret partagé, des informations de décryptage de clé et un jeton d'authentification et générer un décrypteur spécifique à l'aide d'au moins le message de contrôle d'autorisation et de la première clé.

43. PSR selon la revendication 42, dans lequel l'authentificateur est adapté pour recevoir le message de contrôle d'autorisation et déterminer si le message de contrôle d'autorisation est authentique, et le module décrypteur-générateur est adapté pour générer un décrypteur uniquement si le module authentificateur a déterminé que le message de contrôle d'autorisation est authentique.

44. PSR selon la revendication 43, dans lequel la mémoire inclut un secret partagé qui est partagé par le PSR et la tête de réseau, où l'authentificateur génère un deuxième jeton d'authentification à l'aide d'au moins une partie du message de contrôle d'autorisation et du secret partagé et compare le deuxième jeton d'authentification au jeton d'authentification du message de contrôle d'autorisation et détermine que le message de contrôle d'autorisation est authentique lorsque les deux jetons d'authentification sont identiques.

45. PSR selon la revendication 43, dans lequel la mémoire inclut un secret partagé qui est partagé par le PSR et la tête de réseau, où le module décrypteur-générateur est adapté pour traiter les informations de décryptage de clé du message de contrôle d'autorisation avec le secret partagé pour générer une clé de décryptage spécifique, où le module décrypteur-générateur crypte la clé de décryptage spécifique avec la première clé et inclut la clé de décryptage cryptée dans un décrypteur spécifique.

46. PSR selon la revendication 45, dans lequel le module décrypteur-générateur est adapté pour inclure des informations temporelles et un jeton d'authentification dans le décrypteur spécifique.

47. PSR selon la revendication 45, dans lequel lorsque le module authentificateur détermine que le message de contrôle d'autorisation est authentique, le module vérificateur d'autorisation détermine si le PSR est autorisé à accéder à des paquets du service numérique, et lorsque le module vérificateur d'autorisation détermine que le PSR est autorisé à accéder à des paquets du service numérique, le module décrypteur-générateur génère la clé de décryptage en cryptant les informations de clé de décryptage avec le secret partagé.

48. PSR selon la revendication 34, comprenant en outre : un module de challenge qui communique avec le module de génération de clé, le module de challenge étant adapté pour générer un challenge et inclure le challenge dans un message.

49. PSR selon la revendication 48, dans lequel le module de challenge est en outre adapté pour recevoir un message de challenge de réponse et authentifier le message de challenge de réponse à l'aide du challenge généré.
